# EUROPEAN PATENT SPECIFICATION

(11) **EP 3 488 167 B1**
(45) Date of publication and mention of the grant of the patent: **25.11.2020**
(21) Application number: 17835034.4
(22) Date of filing: 23.07.2017
(51) Int. Cl.: F27D 21/00, H05B 6/06, F27D 11/06, H05B 6/28

(54) **ELECTRIC INDUCTION FURNACE WITH LINING WEAR DETECTION SYSTEM**
ELEKTRISCHER INDUKTIONSOFEN MIT VERKLEIDUNGSVERSCHLEISSDETEKTIONSSYSTEM
FOUR À INDUCTION ÉLECTRIQUE DOTÉ D'UN SYSTÈME DE DÉTECTION DE L'USURE DU REVÊTEMENT

(30) Priority: 25.07.2016 US 201615218787
(43) Date of publication of application: 29.05.2019
(73) Proprietor: Inductotherm Corp., Rancocas, New Jersey 08073 (US)
(72) Inventor: PRABHU, Satyen N., Voorhees, New Jersey 08043 (US); SHORTER, Thomas W., Hainesport, New Jersey 08036 (US); HAINES, Ted, Westampton, New Jersey 08060 (US); BELL, Edward J., Medford, New Jersey 08055 (US)
(74) Representative: Gill, David Alan
(86) International application number: PCT/US2017/043429
(87) International publication number: WO 2018/022472

(56) References cited:
- EP-A2- 1 818 638
- DE-A1- 19 602 249
- JP-A- 2008 275 203
- JP-U- S58 131 398
- US-A- 4 675 879
- US-A- 6 148 018
- US-A1- 2005 035 076
- US-A1- 2012 300 806

## Description

### Field of the Invention

The present invention relates to electric induction furnaces, and in particular, to detecting the wear of furnace linings in electric induction furnaces.

### Background of the Invention

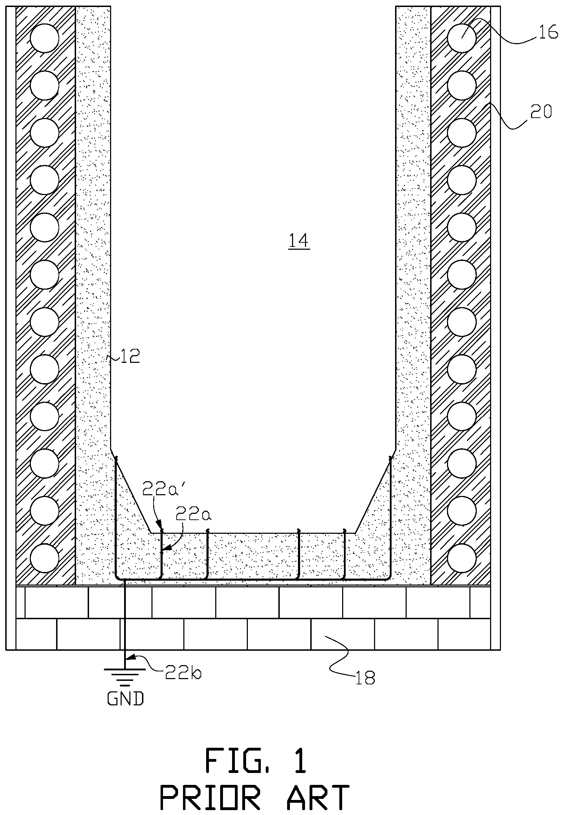

FIG. 1 illustrates components of a typical electric induction furnace relevant to a replaceable refractory lining used in the furnace. Replaceable lining 12 (shown stippled in the figure) consists of a material with a high melting point that is used to line the inside walls of the furnace and form interior furnace volume 14. A metal or other electrically conductive material is placed within volume 14 and is heated and melted by electric induction. Induction coil 16 surrounds at least a portion of the exterior height of the furnace and an alternating current flowing through the coil creates a magnetic flux that couples with the material placed in volume 14 to inductively heat and melt the material. Furnace foundation 18 is formed from a suitable material such as refractory bricks or cast blocks. Coil 16 can be embedded in a trowelable refractory (grout) material 20 or other refractory that serves as thermal insulation and protective material for the coil. A typical furnace ground leak detector system includes probe wires 22a protruding into melt volume 14 through the bottom of lining 12 as illustrated by wire end 22a' protruding into the melt volume. Wires 22a are connected to electrical ground lead 22b, which is connected to a furnace electrical ground (GND). Wires 22a, or other arrangements used in a furnace ground leak detector system may be generally referred to herein as a ground probe.

As the furnace is used for repeated melts within volume 14, lining 12 is gradually consumed. Lining 12 is replenished in a furnace relining process after a point in the service life of the furnace. Although it is contrary to safe furnace operation and disregards the recommendation of the refractory manufacturer and installer, an operator of the furnace may independently decide to delay relining until refractory lining 12 between the molten metal inside furnace volume 14 and coil 16 has deteriorated to the state that furnace coil 16 is damaged and requires repair, and/or foundation 18 has been damaged and requires repair. In such event, the furnace relining process becomes extensive.

U.S. Patent No. 7,090,801 discloses a monitoring device for melting furnaces that includes a closed circuit consisting of several conductor sections with at least a partially conducting surface and a measuring/displaying device. A comb-shaped first conductor section is series connected through an ohmic resistor R to a second conductor section. The comb-shaped first conductor section is mounted on the refractory lining and arranged directly adjacent, however, electrically isolated from the second conductor section.

U.S. Patent No. 6,148,018 discloses an induction melting furnace that includes a detection system for sensing metal penetration into a wall of the furnace depending upon detecting heat flow from the hearth to the furnace. An electrode system is interposed between the induction coil and a slip plane material that serves as a backing to the refractory lining. The electrode system comprises a sensing mat housing conductors receiving a test signal from the power supply, wherein the sensing mat includes a temperature sensitive binder that varies conductivity between the conductors in response to heat penetration through the lining.

U.S. Patent No. 5,319,671 discloses a device that has electrodes arranged on the furnace lining. The electrodes are divided into two groups of different polarity and are spaced apart from each other. The electrode groups can be connected to a device that determines the electrical temperature-dependent resistance of the furnace lining. At least one of the electrodes is arranged as an electrode network on a first side on a ceramic foil. Either the first side of the ceramic foil or the opposite side is arranged on the furnace lining. The foil in the former case has a lower thermal conductivity and a lower electrical conductivity than the ceramic material of the furnace lining, and in the latter case an approximately identical or higher thermal conductivity and an approximately identical or higher electrical conductivity.

U.S. Patent No. 1,922,029 discloses a shield that is inserted in the furnace lining to form one contact of a control circuit. The shield is made of sheet metal and is bent to form a cylinder. When metal leaks out from the interior of furnace it makes contact with the shield, and the signal circuit is closed.

U.S. Patent No. 1,823,873 discloses a ground shield that is located within the furnace lining and spaced apart from the induction coil. An upper metallic conduit of substantially open annular shape is provided, as is also a similar lower metal conduit also of open annular shape. A plurality of relatively smaller metallic pipes or conduits extend between the two larger conduits and are secured thereto in a fluid-tight manner. A ground is provided which is connected to the protecting shield.

US2012/300806A1 discloses a method of fabricating an electric induction furnace with a lining wear detection system, the method comprising the steps of: locating a wound induction coil above a foundation; installing a refractory around the wound induction coil to form a refractory embedded induction coil; positioning a wire assemblage refractory mold within the refractory embedded induction coil to provide a wire assemblage refractory volume between an outer wire assemblage refractory mold wall of the wire assemblage refractory mold and an inner refractory embedded induction coil wall of the refractory embedded induction coil; fitting at least one electrically conductive wire assemblage around the outer wire assemblage refractory mold wall of the wire assemblage refractory mold; providing a wire assemblage refractory into the wire assemblage refractory volume to embed the at least one electrically conductive wire assemblage in the wire assemblage refractory to form an embedded wire assemblage refractory in the wire assemblage refractory volume; removing the wire assemblage refractory mold to form an interior wire assemblage refractory furnace volume; positioning a replaceable lining mold within the interior of the wire assemblage refractory furnace volume to form a replaceable lining wall volume between an outer replaceable lining mold wall of the replaceable lining mold and an inner embedded wire assemblage refractory wall of the embedded wire assemblage refractory, and a replaceable lining bottom volume above the foundation; feeding a replaceable lining refractory into the replaceable lining wall volume and the replaceable lining bottom volume; and removing the replaceable lining mold to form an interior volume of the electric induction furnace.

One object of the present invention is to provide an electric induction furnace with a lining wear detection system that can assist in avoiding furnace coil damage and/or bottom foundation damage due to lining wear when the furnace is properly operated and maintained.

Another object of the present invention is to provide a method for fabricating an electric induction furnace with a lining wear detection system that utilizes an electrically conductive wire assemblage embedded in a separate wire assemblage refractory.

### Brief Summary of the Invention

In one aspect, the present invention is a method of fabricating an electric induction furnace with a lining wear detection system. A wound induction coil is located above a foundation and a refractory is installed around the wound induction coil to form a refractory embedded induction coil. A wire assemblage refractory mold is positioned within the refractory embedded induction coil to provide a wire assemblage refractory volume between the outer wire assemblage refractory mold wall of the wire assemblage refractory mold and an inner refractory induction coil wall of the refractory embedded induction coil. A temporary top wire assemblage fixture is fitted around the top circumference of the wire assemblage refractory mold and a temporary bottom wire assemblage fixture around the bottom circumference of the wire assemblage refractory mold, each of the temporary top and bottom wire assemblage fixtures having a plurality of circumferential wire insertion notches around the circumference of each of the temporary top and bottom wire assemblage fixtures, each of the plurality of circumferential wire insertion notches having a wire turn sub-notch. At least one electrically conductive wire assemblage is fitted around the outer wire assemblage refractory mold wall of the wire assemblage refractory mold, the at least one electrically conductive wire assemblage comprising at least one continuous wire, the at least one continuous wire vertically weaved at least partially around the height of the outer circumference of the temporary top and bottom wire assemblage fixtures by sequential insertion of the single continuous wire within the wire turn notch of each circumferential wire insertion notches of the temporary top and bottom wire assemblage fixtures. A wire assemblage refractory is provided into the wire assemblage refractory volume to embed the at least one electrically conductive wire assemblage in the wire assemblage refractory to form an embedded wire assemblage refractory in the wire assemblage refractory volume. The wire assemblage refractory mold and the temporary top and bottom wire assemblage fixtures are removed to form an interior wire assemblage refractory furnace volume, and a replaceable lining mold is positioned within the interior of the wire assemblage refractory furnace volume to form a replaceable lining wall volume between outer replaceable lining mold wall of the replaceable lining mold and an inner embedded wire assemblage refractory wall of the embedded wire assemblage refractory, and a replaceable lining bottom volume above the foundation. A replaceable lining refractory is fed into the replaceable lining wall volume and the replaceable lining bottom volume, and the replaceable lining mold is removed to form an interior volume of the electric induction furnace.

### Brief Description of the Drawings

The figures, in conjunction with the specification and claims, illustrate one or more non-limiting modes of practicing the invention. The invention is not limited to the illustrated layout and content of the drawings.
FIG. 1 is a simplified cross sectional diagram of one example of an electric induction furnace.
FIG. 2 is a cross sectional diagram of one example of an electric induction furnace with a lining wear detection system.
FIG. 3(a) illustrates in flat planar view one example of an electrically conductive mesh, a lining wear detection circuit, and a control and/or indicating (detector) circuit used in the electric induction furnace shown in FIG. 2
FIG. 3(b) illustrates in top plan view the electrically conductive mesh shown in FIG. 3(a) in the shape as installed around the circumference of the electric induction furnace shown in FIG. 2.
FIG. 4 is a cross sectional diagram of another example of an electric induction furnace with a lining wear detection system that includes a bottom electrically conductive mesh.
FIG. 5(a) and 5(b) illustrate in top plan view alternative bottom electrically conductive mesh, bottom lining wear detection circuit, and control and/or indicating (detector) circuit used for bottom lining wear detection.
FIG. 6(a) through FIG. 6(g) illustrate fabrication of one example of an electric induction furnace with a lining wear detection system.
FIG. 7 is a detail of one example of the electrically conductive mesh embedded in a cast flowable refractory used in an electric induction furnace with a lining wear detection system.
FIG. 8 is a cross sectional diagram of another example of an electric induction furnace with a lining wear detection system.
FIG. 9(a) through FIG. 9(d) illustrate alternative arrangements of electrically conductive mesh, lining wear detection circuits and detectors used in the electric induction furnace with a lining wear detection system.
FIG. 10 is a cross sectional diagram of one example of an electric induction furnace with a lining wear detection system that uses an electrically conductive wire assemblage embedded in a wire assemblage embedded refractory.
FIG. 11(a) illustrates in flat planar view one example of an electrically conductive wire assemblage, a lining wear detection circuit, and a control and/or indicating (detector) circuit used in the electric induction furnace shown in FIG. 10.
FIG. 11(b) illustrates in top plan view the electrically conductive wire assemblage shown in FIG. 11(a) embedded in the wire assemblage refractory in the shape as installed around the circumference of the electric induction furnace shown in FIG. 10.
FIG. 12(a) illustrates in flat planar view another example of an electrically conductive wire assemblage, a lining wear detection circuit, and a control and/or indicating (detector) circuit that can be used in the furnace volume shown in FIG. 10.
FIG. 12(b) illustrates in top plan view one example of a fixture that is used to install the electrically conductive wire assemblage shown in FIG. 12(a) around the top circumference of the electric induction furnace shown in FIG. 10.
FIG. 12(c) illustrates in partial elevation view one example of the fixture shown in FIG. 12(b).
FIG. 12(d) illustrates in partial elevation view one example of weaving a continuous electrically conductive wire assemblage around the fixture shown in FIG. 12(b).
FIG. 12(e) illustrates in partial elevation view one example of a fixture that is used to install the electrically conductive wire assemblage shown in FIG. 12(a) around the bottom circumference of the electric induction furnace shown in FIG. 10.
FIG. 13 is a cross sectional diagram of another example of an electric induction furnace with a lining wear detection system that includes a bottom electrically conductive mesh or wire assemblage.
FIG. 14(a), 14(b) and 14(c) respectively illustrate in top plan view alternative bottom electrically conductive discontinuous mesh; continuous mesh; and wire assemblage, with bottom lining wear detection circuit, and control and/or indicating (detector) circuit used for bottom lining wear detection.
FIG. 15(a) through FIG. 15(h) illustrate fabrication of alternative examples of an electric induction furnace with a lining wear detection system of the present invention that use an electrically conductive wire assemblage embedded in a wire assemblage embedded refractory.
FIG. 16 is a detail of one example of the electrically conductive wire assemblage embedded in a refractory used in an electric induction furnace with a lining wear detection system of the present invention.
FIG. 17 is a cross sectional diagram of another example of an electric induction furnace with a lining wear detection system of the present invention that uses an electrically conductive wire assemblage embedded in a wire assemblage embedded refractory.
FIG. 18(a) through FIG. 18(c) illustrate alternative arrangements of electrically conductive wire assemblage, lining wear detection circuits and detectors used in the electric induction furnace with a lining wear detection system of the present invention.

### Detailed Description of the Invention

Embodiments encompassing a "mesh" lining wear detection system do not form a part of the invention and represent background art that is useful for understanding the invention where a "wire" assemblage lining wear detection system is used optionally in combination with a furnace bottom mesh lining wear detection system.

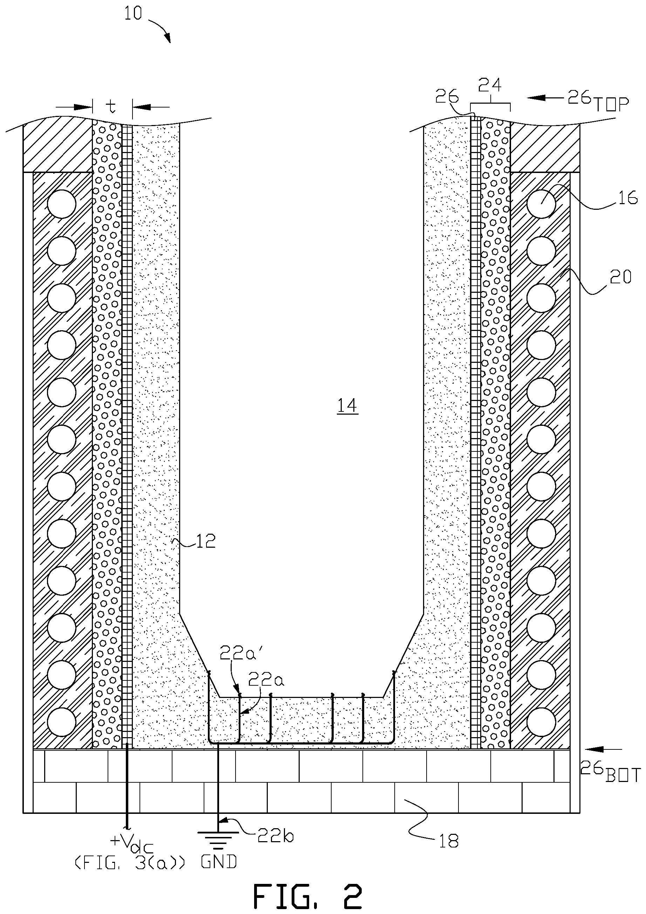

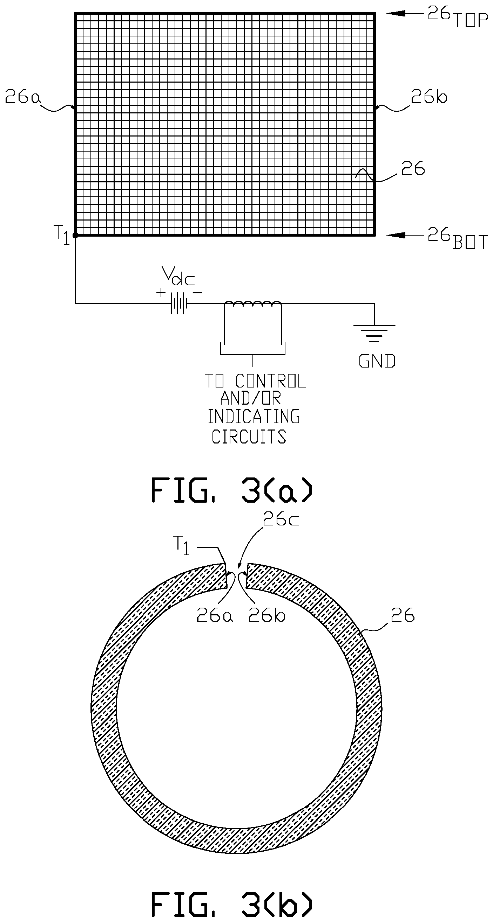

There is shown in FIG. 2 one example of an electric induction furnace 10 with a lining wear detection system. A cast flowable refractory 24 is disposed between coil 16 and replaceable furnace lining 12. In this example, electrically conductive mesh 26, (for example, a stainless steel mesh) is embedded within the inner boundary of castable refractory 24 that is adjacent to the outer boundary of lining 12. One non-limiting example of a suitable mesh is formed from type 304 stainless steel welded wire cloth with mesh size 4 x 4; wire diameter between 711.2 - 812.8 µm (0.028-0.032-inch); and opening width of 5.64 - 5.54 mm (0.222-0.218-inch). As shown in FIG. 3(a) and 3(b) for this example, mesh 26 forms a discontinuous cylindrical mesh boundary between castable refractory 24 and lining 12 from the top (26_{TOP}) to the bottom (26_{BOT}) of the outer boundary of the lining wall. One vertical side 26a of mesh 26 is suitably connected to a positive electric potential that can be established by a suitable voltage source, such as direct current (DC) voltage source V c that has its other terminal connected to furnace electrical ground (GND). A lining wear detection circuit is formed between the positive electric potential connected to the electrically conductive mesh and the negative electric potential connected to the furnace electrical ground. Vertical discontinuity 26c (along the height of the lining in this example) in mesh 26 is sized to prevent short circuiting between opposing vertical sides 26a and 26b of mesh 26. Alternatively the mesh may be fabricated in a manner so that the mesh is electrically isolated from itself; for example, a layer of electrical insulation can be provided between two overlapping ends (sides 26a and 26b in this example) of the mesh. As shown in FIG. 3(a) the voltage source circuit can be connected to control and/or indicating circuits via suitable circuit elements such as a current transformer. The control and/or indicating circuits are referred to collectively as a detector. As lining 12 is gradually consumed during the service life of the furnace, DC leakage current will rise, which can be sensed in the control/indicating circuits. For a particular furnace design, a leakage current rise level set point can be established for indication of lining replacement when the furnace is properly operated and maintained.

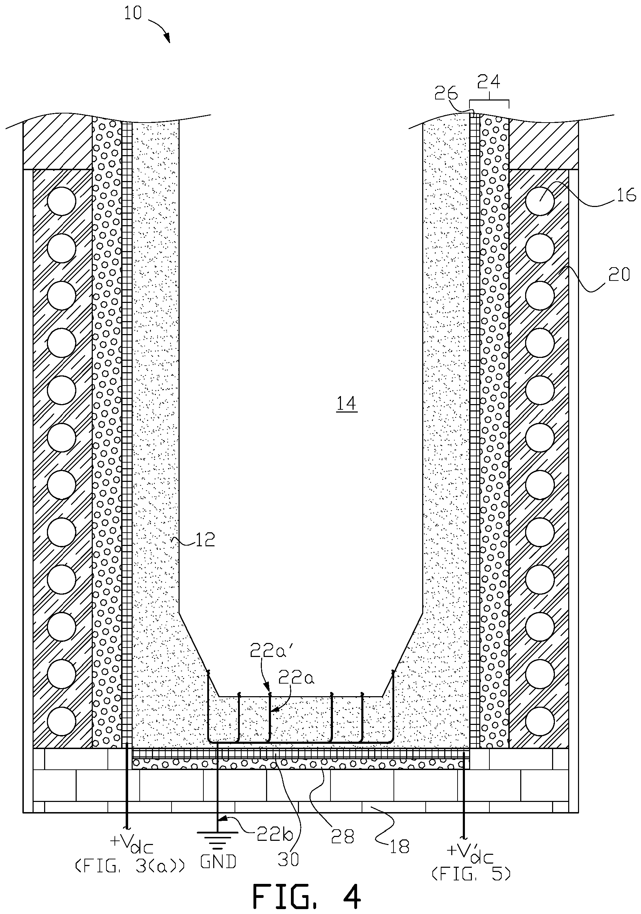

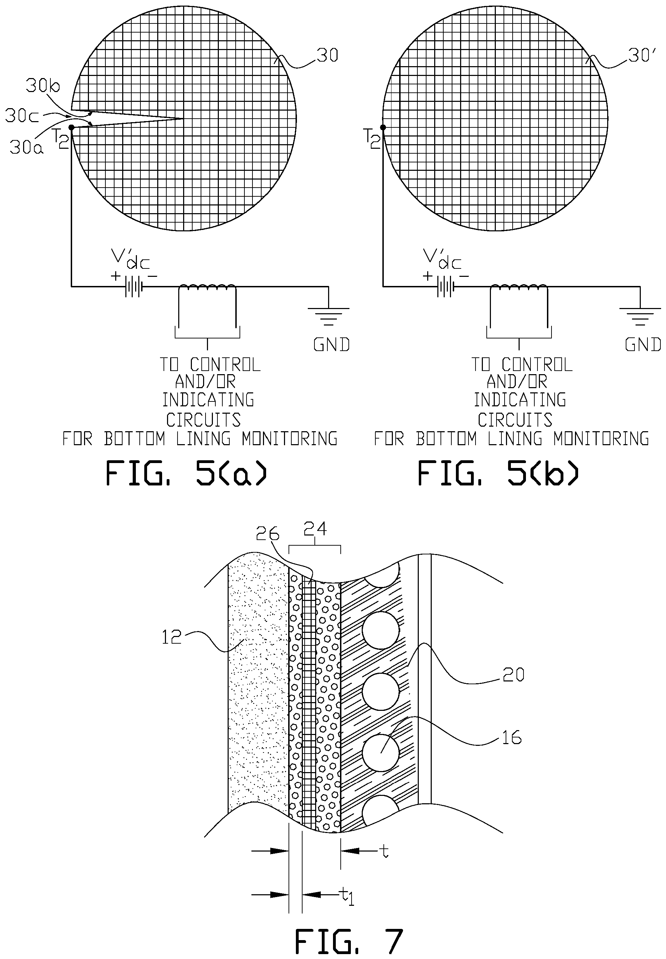

In some examples, a bottom lining wear detection system may be provided as shown, for example in FIG. 4, in addition to the wall lining wear detection system shown in FIG. 2. In FIG. 4 electrically conductive bottom mesh 30 is disposed within cast flowable refractory 28 with bottom mesh 30 adjacent to the lower boundary of lining 12 at the bottom of the furnace. As shown in FIG. 5(a) in this example, bottom mesh 30 forms a discontinuous circular mesh boundary between bottom cast flowable refractory 28 and the bottom of lining 12. In other examples, the bottom mesh boundary may be formed from a continuous circular mesh 30' as shown in FIG. 5(b) between bottom cast flowable refractory 28 and the bottom of lining 12. In the discontinuous examples, discontinuous radial side 30a of bottom mesh 30 is suitably connected to a positive electric potential established by a suitable voltage source V'_{dc} that has its other terminal connected to furnace electrical ground (GND). A bottom lining wear detection circuit is formed between the positive electric potential connected to the electrically conductive bottom mesh and the negative electric potential connected to the furnace electrical ground. If use, radial discontinuity 30c in mesh 30 is sized to prevent short circuiting between opposing radial sides 30a and 30b of mesh 30. Alternatively the mesh may be fabricated in a manner so that the mesh is electrically isolated from itself; for example, a layer of electrical insulation can be provided between two overlapping ends (radial sides 30a and 30b in this example) of the mesh. As shown in FIG. 5(a), the bottom lining wear detection circuit can be connected to a bottom lining wear control and/or indicating circuits, which are collectively referred to as a detector. As the bottom of lining 12 is gradually consumed during the service life of the furnace, DC leakage current will rise, which can be sensed in the bottom lining wear control and/or indicating circuits. For a particular furnace design, a leakage current rise level set point can be established for indication of lining replacement, based on bottom lining wear, when the furnace is properly operated and maintained.

The particular arrangements of the discontinuous side wall and bottom meshes shown in the figures are one example of discontinuous mesh arrangements when required in a particular application. The purpose for the discontinuity is to prevent eddy current heating of the mesh when required from inductive coupling with the magnetic flux generated when alternating current is flowing through induction coil 16 when the coil is connected to a suitable alternating current power source during operation of the furnace. Therefore other arrangements of side wall and bottom meshes are acceptable as long as the mesh arrangement prevents such inductive heating of the mesh when required in a particular application. Similarly arrangement of the electrical connection(s) of the mesh to the lining wear detection circuit, and the control and/or indicating circuits can vary depending upon a particular furnace design. Depending upon the physical arrangement of a particular electric induction furnace continuous bottom and/or side wall meshes may be satisfactory without excessive eddy current heating.

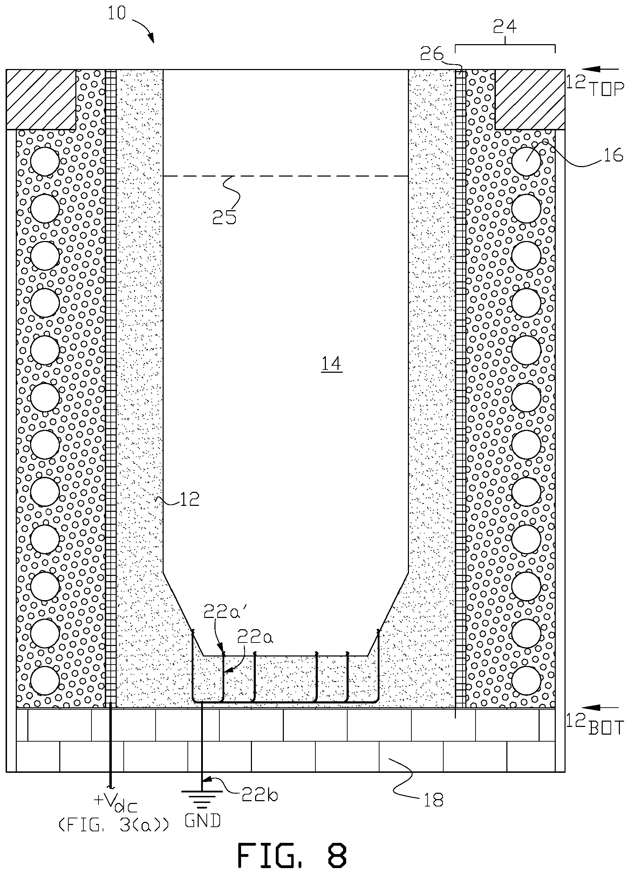

In some examples refractory embedded wall mesh 26 may extend for the entire vertical height of lining 12, that is, from the bottom (12_{BOT}) of the furnace lining to the very top (12_{TOP}) of the furnace lining that is above the nominal design melt line 25 for a particular furnace as shown, for example, in FIG. 8.

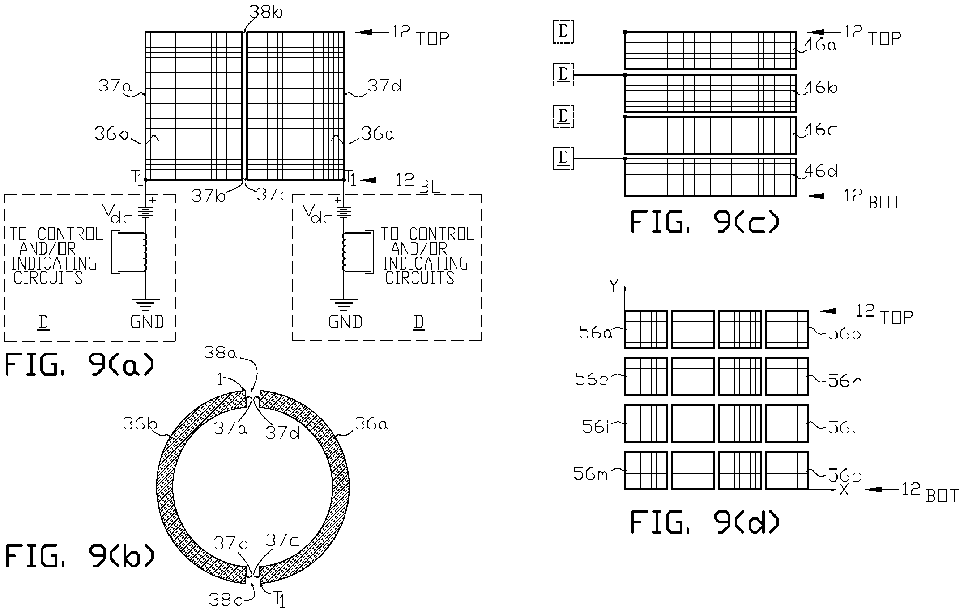

In other applications, wall mesh 26 may be provided in one or more selected discrete regions along the vertical height of lining 12. For example in FIG. 9(a) and FIG. 9(b) wall mesh comprises two vertical electrically conductive meshes 36a and 36b that are electrically isolated from each other and connected to separate lining wear detection circuits so that lining wear can be diagnosed as being on either one half side of the furnace lining. In this example there are two electrical discontinuities 38a (formed between vertical sides 37a and 37d) and 38b (formed between vertical sides 37b and 37c) along the vertical height of the two meshes 36a and 36b. Further any multiple of separate, vertically oriented and electrically isolated wall mesh regions may be provided along the vertical height of lining 12 with each separate wall mesh region being connected to a separate lining wear detection circuit so that lining wear could be localized to one of the wall mesh regions. Alternatively as shown in FIG. 9(c) the multiple electrically conductive meshes 46a through 46d can be horizontally oriented with each electrically isolated mesh connected to a separate lining wear detection circuit and control and/or indicating circuits (D) so that lining wear can be localized to one of the isolated mesh regions. Most generally as shown in FIG. 9(d) the multiple electrically conductive meshes 56a through 56p can be arrayed around the height of the replaceable lining wall with each electrically conductive mesh connected to a separate lining wear detection circuit, and control and/or indicating circuits (not shown in the figure) so that lining wear can be localized to one of the isolated mesh regions that can be defined by a two-dimensional X-Y coordinate system around the circumference of the replaceable lining wall with the X coordinate defining a position around the circumference of the lining and the Y coordinate defining a position along the height of the lining.

In similar fashion bottom mesh 30 may cover less than the entire bottom of replaceable lining 12 in some examples, or comprise a number of electrically isolated bottom meshes with each of the electrically isolated bottom meshes connected to a separate lining wear detection circuit so that lining wear could be localized to one of the bottom mesh regions.

Alternatively to a separate detector (control and/or indicating circuits) used with each lining wear detection circuit in the above examples, a single detector can be switchably connected to the lining wear detection circuits associated with two or more of the electrically isolated meshes.

While the figures illustrate separate wall and bottom lining wear detection systems, in some examples, a combined wall and bottom lining wear detection system may be provided either by (1) providing a continuous side and bottom mesh embedded in an integrally cast flowable refractory with a single lining wear detection circuit and detector or (2) providing separate side and bottom meshes embedded in a cast flowable refractory with a common lining wear detection circuit and detector.

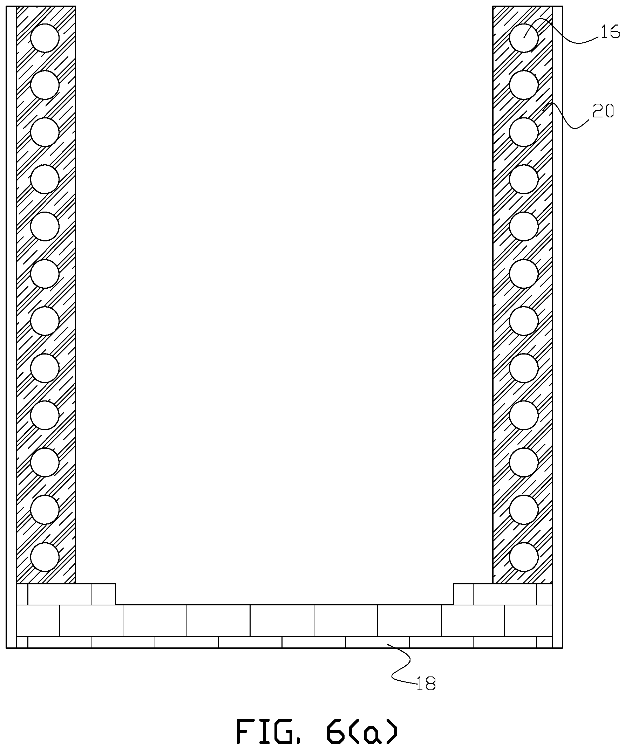

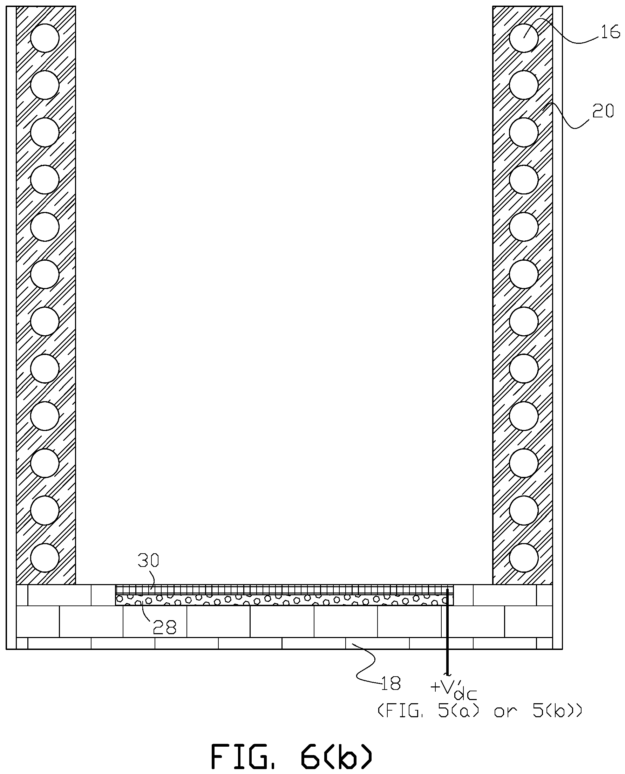

FIG. 6(a) through FIG. 6(f) illustrate one example of fabrication of an electric induction furnace with a lining wear detection system. Induction coil 16 can be fabricated (typically wound) and positioned over suitable foundation 18. As shown in FIG. 6(a) trowelable refractory (grout) material 20, or other refractory, can be installed around the coil as in the prior art. One suitable proprietary trowelable refractory material 20 is INDUCTOCOAT™ 35AF (available from Inductotherm Corp., Rancocas, New Jersey). If a bottom lining wear detection system is used, bottom mesh 30 can be fitted at the top of foundation 18 and embedded in cast flowable refractory by pouring the cast flowable refractory around bottom mesh 30 so that the mesh is embedded within the refractory after it sets as shown in FIG. 6(b). Alternatively the bottom mesh can be cast in a cast flowable refractory 28 in a separate mold and then the cast refractory embedded bottom mesh can be installed in the bottom of the furnace after the cast flowable refractory sets.

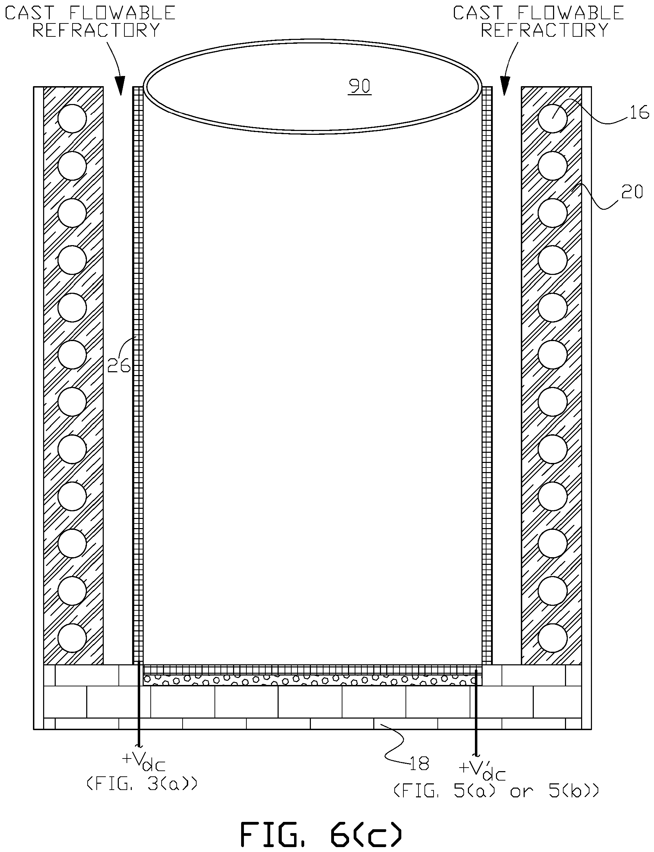

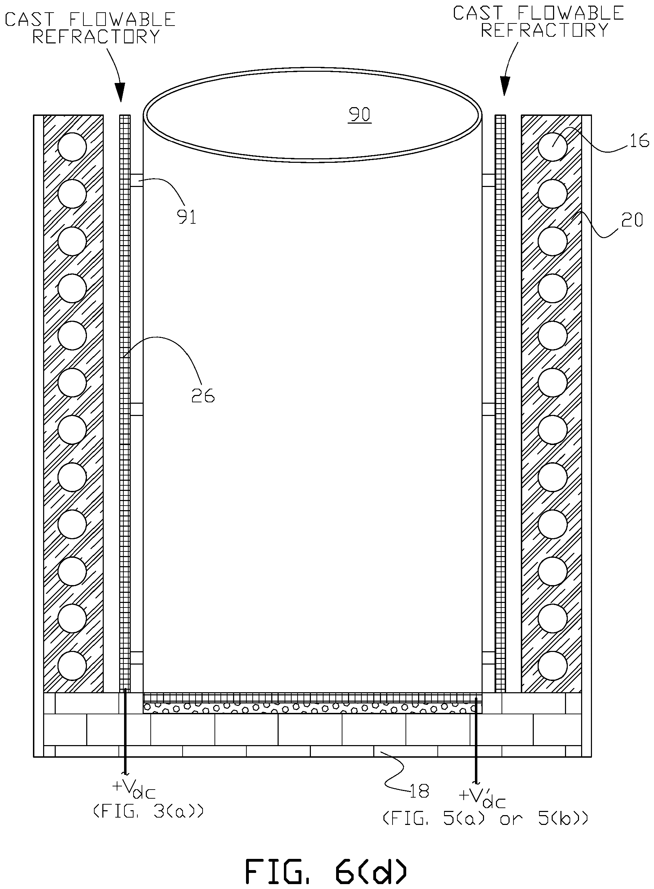

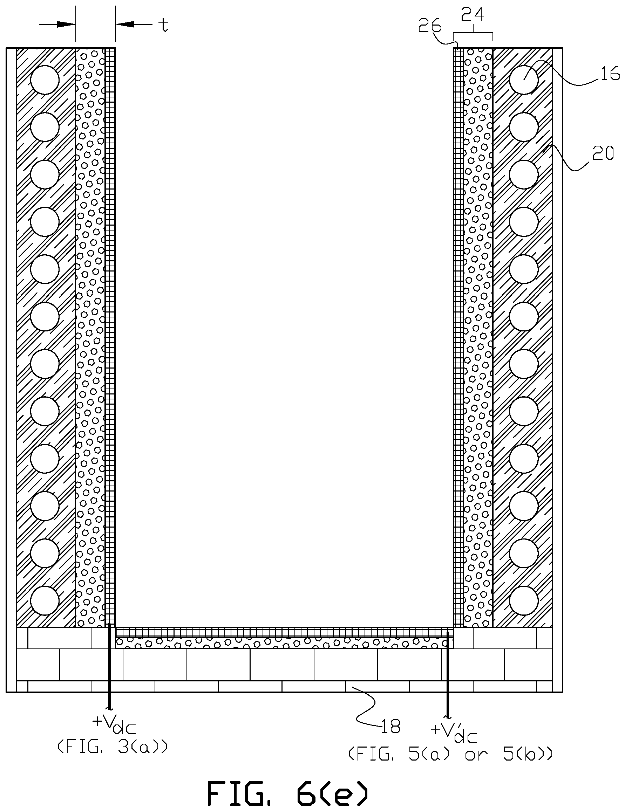

A suitable temporary cast flowable refractory mold 90 (or molds forming a formwork) for example, in the shape of an open right cylinder, is positioned within the volume formed by coil 16 and refractory material 20 to form a cast flowable refractory annular volume between refractory material 20 and the outer wall perimeter of the mold as shown in FIG. 6(c). Mesh 26 is fitted around the outer perimeter of temporary mold 90 and the cast flowable refractory 24, such as INDUCTOCOAT™ 35AF-FLOW (available from Inductotherm Corp., Rancocas, New Jersey), can be poured into the cast flowable refractory annular volume to set and form hardened castable refractory 24 as shown in FIG. 6(e). Vibrating compactors can be used to release trapped air and excess water from the cast flowable refractory so that the refractory settles firmly in place in the formwork before setting. Mesh 26 will be at least partially embedded in cast flowable refractory 24 when it sets inside of the cast flowable refractory annular volume. In other examples mesh 26 can be embedded anywhere within the thickness, t, of cast flowable refractory 24. For example as shown in FIG. 7, mesh 26 is offset by distance, t₁, from the inner wall perimeter of cast flowable refractory 24. Offset embedment can be achieved by installing suitable standoffs 91 around the outer perimeter of mold 90 as shown in FIG. 6(d) and then fitting mesh 26 around the standoffs before pouring the cast flowable refractory. In the broadest sense as used herein, the terminology mesh "embedded" in a cast flowable refractory is understood as the mesh is either fixed within the refractory; at a surface boundary of the refractory, or sufficiently, but not completely, embedded at a surface boundary of the refractory so that the mesh is retained in place in the refractory after the refractory sets.

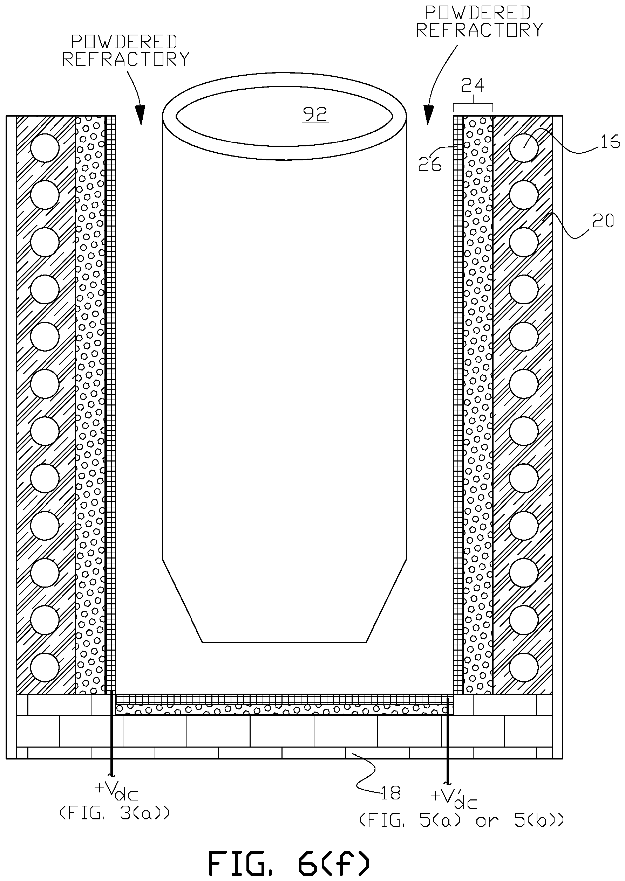

After cast flowable refractory 24 sets, temporary mold 90 is removed, and a replaceable lining mold 92 that is shaped to conform to the boundary wall and bottom of interior furnace volume 14 can be positioned within the volume formed by set cast flowable refractory 24 (with embedded mesh 26) to form a replaceable lining annular volume between set cast flowable refractory 24 and the outer wall perimeter of the lining mold 92 as shown in FIG. 6(f). A conventional powdered refractory can then be fed into the lining volume according to conventional procedures. If lining mold 92 is formed from an electrically conductive mold material, lining mold 92 can be heated and melted in place according to conventional procedures to sinter the lining refractory layer that forms the boundary of furnace volume 14. Alternatively the lining mold may be removed and sintering of the lining refractory layer may be accomplished by direct heat application.

Distinction is made between the replaceable lining refractory, which is typically a powdered refractory and the cast flowable refractory in which the electrically conductive mesh is embedded. The cast flowable refractory is preferably used so that the electrically conductive mesh can be embedded in the refractory. The cast flowable refractory is also referred to herein as castable refractory and flowable refractory.

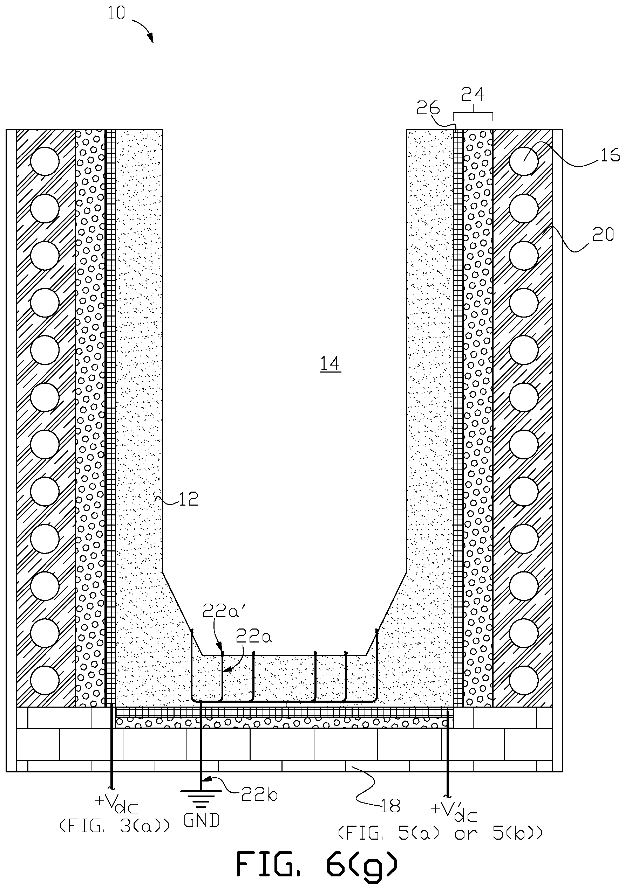

FIG. 6(g) illustrates an electric induction furnace with one example of a lining wear detection system with addition of typical furnace ground leak detector system probe wires 22a and electrical ground lead 22b that is connected to a furnace electrical ground (GND).

The fabrication process described above and as shown in FIG. 6(a) through FIG. 6(g) illustrates one example of fabrication steps of an electric induction furnace with a lining wear detection system. Additional conventional fabrication steps may be required to complete furnace construction.

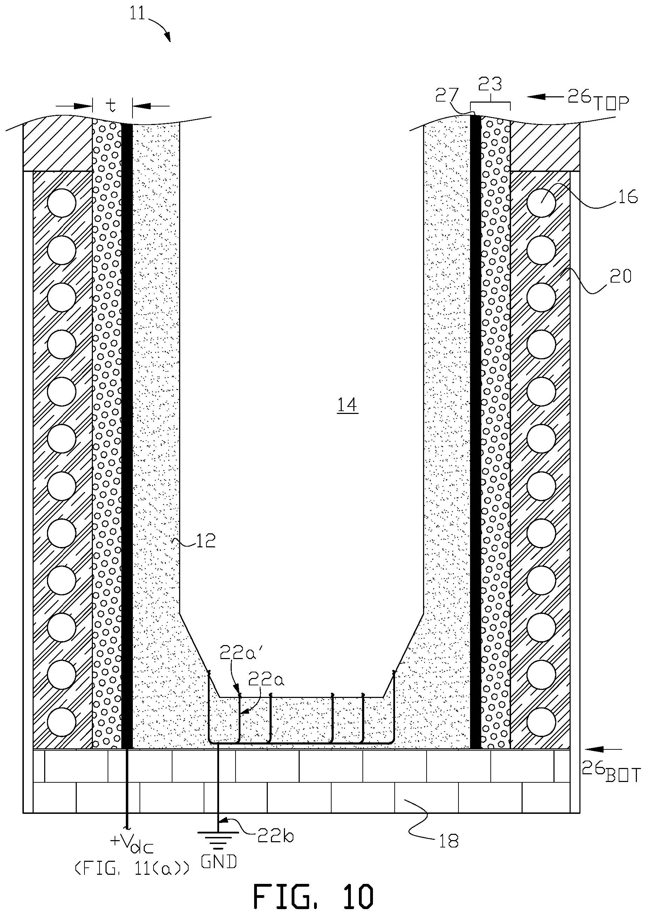

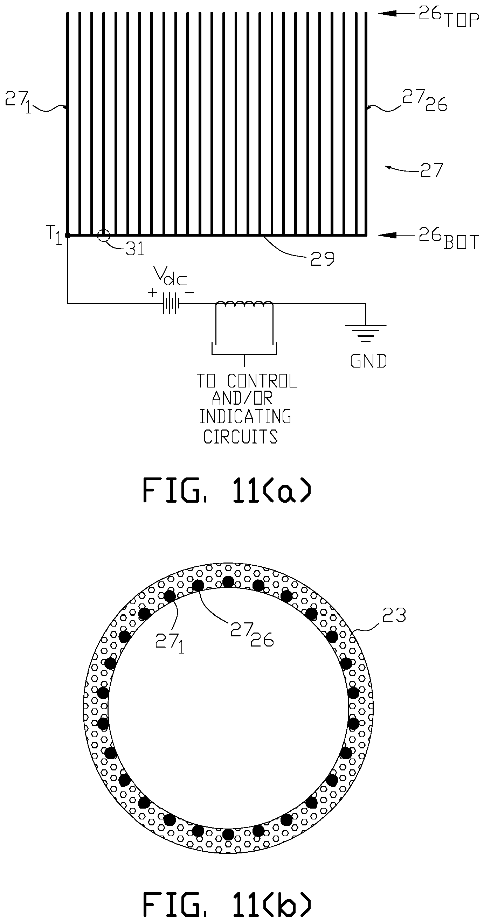

There is shown in FIG. 10 one example of an electric induction furnace 11 with a lining wear detection system. A wall refractory 23 is disposed between coil 16 and replaceable furnace lining 12 and is also referred to as wire assemblage refractory 23. The wall refractory may be a castable or trowelable refractory. In this example of the invention, electrically conductive wire assemblage 27 is embedded within the inner boundary of wall refractory 23 that is adjacent to the outer boundary of lining 12, and wall refractory 23 is also referred to as the wire assemblage refractory. One non-limiting example of a suitable electrically conductive wire assemblage is formed from an assemblage of stainless or copper nickel stranded wire in a range from 18 to 10 AWG depending upon the particular configuration of the induction furnace. In other arrangements of the invention other types of electrically conductive wire may be used as suitable for a particular application. The wire may be bare or insulated if arcing is an issue in a particular application. Stranded wire is preferred although solid wire may be used in some applications. As shown in FIG. 11(a) and 11(b), for this example of the invention, electrically conductive wire assemblage 27 forms a vertical wire cage between wire assemblage refractory 23 and consumable lining 12 from the top (26_{TOP}) to the bottom (26_{BOT}) of the outer boundary of the replaceable lining wall to separate the replaceable lining wall 12 from induction coil 16. In this example of the invention twenty-six vertical wires 27₁ to 27₂₆ are vertically spaced apart from each other around the circumference of wire assemblage refractory 23. In this example of the invention the twenty-six vertically oriented wires are electrically connected together by suitable electrically connecting means such as a collector wire 29 formed from multiple tap connecters or wire lugs 31 to a bottom collector wire of electrically conductive wire assemblage 27 in this example of the invention.

More generally the number of vertical wires used depends upon the configuration of a particular induction furnace and are referred to as riser protection wires. While vertically-oriented riser protection wires are shown in the above example of the invention, in other examples the arrangement of riser protection wires around the circumference of wire assemblage refractory 23 may be of other configurations such as a spiral configuration. While a bottom collector wire is used in the above example of the invention the collector wire may be located anywhere between the top and bottom ends of the riser protection wires and there may be more than one collector wire depending upon a particular application.

In the above example of the invention, collector wire 29 is connected at a single terminal point T₁ to a positive electric potential that can be established by a suitable voltage source, such as direct current (DC) voltage source V_{dc} that has its other (negative) terminal connected to furnace electrical ground (GND). A lining wear detection circuit is formed between the positive electric potential connected to electrically conductive wire assemblage 27 and the negative electric potential connected to the furnace electrical ground. As shown in FIG. 11(a) the voltage source circuit can be connected to control circuits and/or indicating circuits via suitable circuit elements such as a current transformer. Alternatively a direct measurement of leakage current can be provided with suitable direct measurement device such as, but not limited to, a current shunt resistor. The control and/or indicating circuits are referred to collectively as a detector. As consumable lining 12 is gradually consumed during the service life of the furnace, DC leakage current will rise, which can be sensed in the control/indicating circuits. For a particular furnace design, a leakage current rise level set point can be established for indication of lining replacement when the furnace is properly operated and maintained.

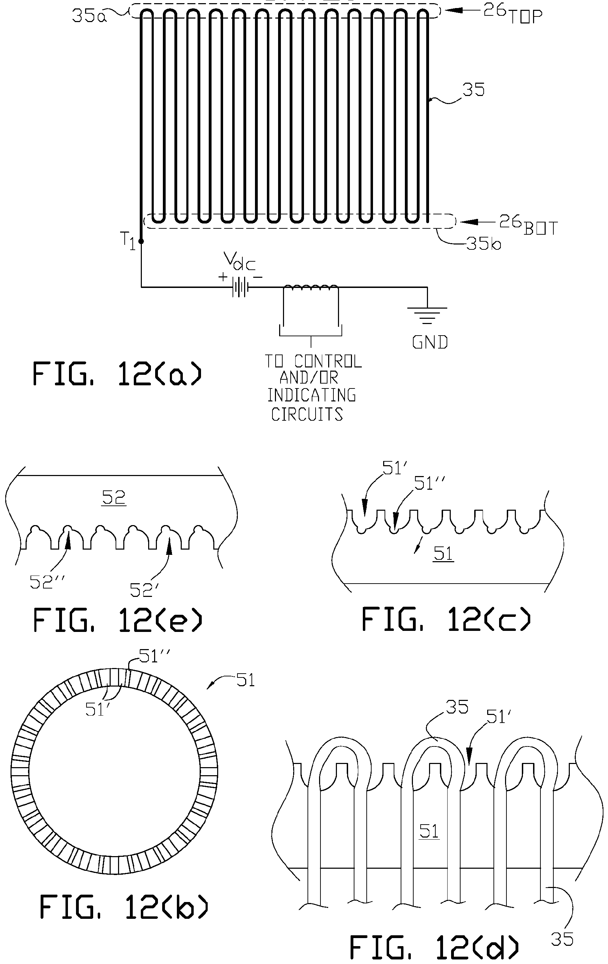

FIG. 12(a) illustrates an alternative to the protective riser wires shown in FIG. 11(a). In FIG. 12(a) a single continuous riser wire 35, which is also referred to as a protective riser wire 35, is provided by weaving the riser wire around the top and bottom circumferences of the induction furnace. Top wire assemblage fixture (fitting) 51 as shown in FIG. 12(b) and FIG. 12(c) is used to facilitate weaving the single continuous wire 35. Fixture 51 is generally cylindrical in shape and has top wire turn notches 51' that facilitate turn of the continuous riser wire 35 at the top of the furnace during installation. Each wire turn notch 51' comprises a generally semicircular cutout volume as seen in cross section in FIG. 12(c) and FIG 12(d) that is larger in cross section than the cross sectional diameter of continuous riser wire 35 to allow rapid insert of the wire into the wire seating sub-notch 51" at the bottom of each wire turn notch 51'. Each wire seating sub-notch 51" has a cross sectional diameter slightly larger than the cross sectional diameter of wire 35. Off-centering of wire seating sub-notch 51" in the direction of the top-to-bottom weave (illustrated by the arrow in FIG. 12(c)) assists in making the turn of the riser wire 180 degrees from the upward to downward direction at the top of the furnace. A bottom wire assemblage fixture (fitting) 52 as shown in FIG. 12(e) is provided to facilitate weaving of the continuous riser wire 35 at the bottom of the induction furnace being assembled. Bottom fixture 52 is similar to top fixture 51 rotated 180 degrees as shown in the figures with complementary arranged bottom wire turn notches 52' and wire seating sub-notches 52". The top and bottom fixtures are temporarily positioned respectively at, or adjacent to, the top and bottom of the wire assemblage refractory when used during the fabrication of an electric induction furnace.

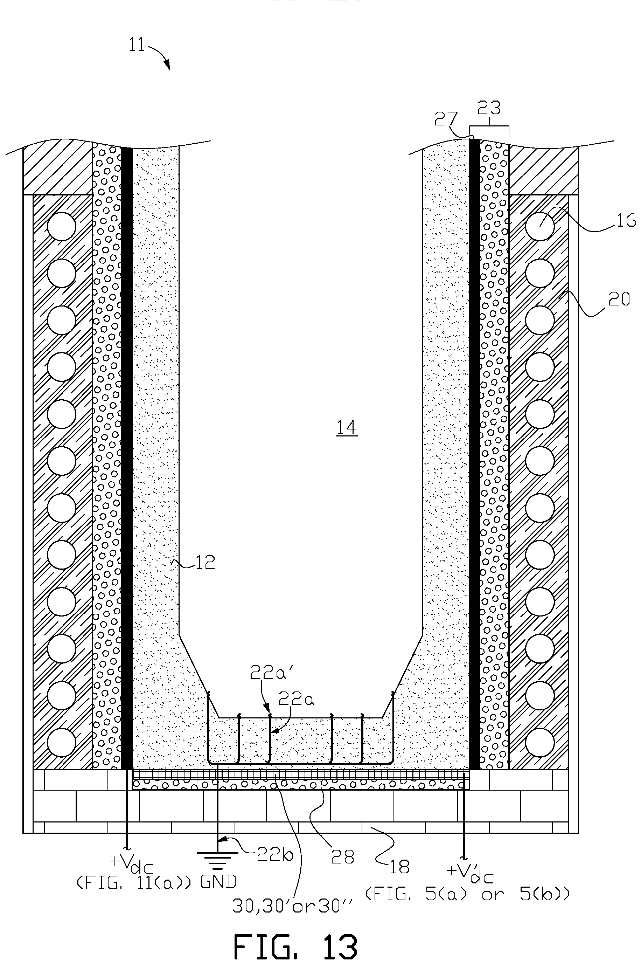

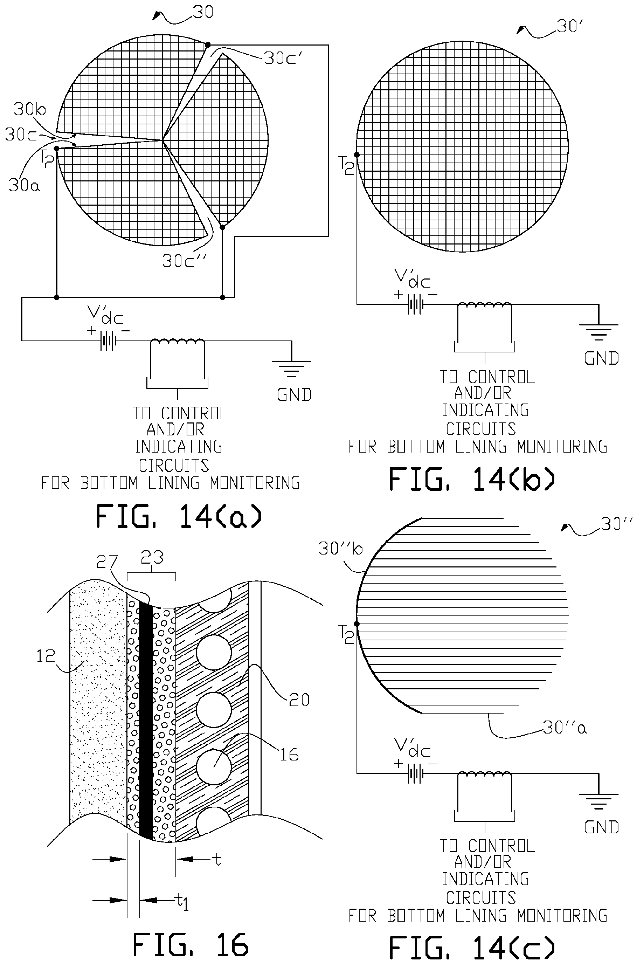

In some examples, a bottom lining wear detection system may be provided as alternatively shown, for example in FIG. 14(a), 14(b) or 14(c), in addition to one of the wall lining wear detection systems shown in FIG. 11(a) and FIG. 11(b). In FIG. 13 electrically conductive discontinuous bottom mesh 30; continuous bottom mesh 30'; or wire assemblage 30" is disposed within bottom refractory 28 with bottom mesh 30 adjacent to the lower boundary of lining 12 at the bottom of the furnace. For the bottom lining wear system shown in FIG. 14(a), bottom mesh 30 forms an electrically discontinuous circular mesh boundary between bottom refractory 28 and the bottom of lining 12. In alternative applications, the bottom mesh boundary may be formed from a continuous circular mesh 30' as shown in FIG. 14(b) between bottom cast flowable refractory 28 and the bottom of lining 12, or one or more electrically conductive wire assemblage 30" as shown in FIG. 14(c) with a plurality of electrically isolated bottom linear wires 30"a interconnected by bottom collector wire 30"b. In examples where the electrically discontinuous bottom mesh 30 is used, at least one discontinuous radial side 30a of bottom mesh 30 is suitably connected to a positive electric potential established by a suitable voltage source V'_{dc} that has its other terminal connected to furnace electrical ground (GND). A bottom lining wear detection circuit is formed between the positive electric potential connected to the electrically conductive bottom mesh or wire assemblage and the negative electric potential connected to the furnace electrical ground. In applications where it is used, the at least one radial electrical discontinuity 30c in mesh 30 is sized to prevent short circuiting between opposing radial sides 30a and 30b of mesh 30 and may include multiple discontinuities 30c, 30c' and 30c" as shown in FIG. 14(a) when required for a particular application. In alternative applications, the bottom mesh boundary may be formed from a continuous circular mesh 30' as shown in FIG. 14(b) between bottom cast flowable refractory 28 and the bottom of lining 12, or one or more electrically conductive wire assemblage 30" as shown in FIG. 14(c). Alternatively the mesh may be fabricated in a manner so that the mesh is electrically isolated from itself. As shown in the alternative arrangements of FIG. 14(a), FIG. 14(b) and FIG. 14(c), the bottom lining wear detection circuit can be connected to a bottom lining wear control and/or indicating circuits, which are collectively referred to as a detector. As the bottom of lining 12 is gradually consumed during the service life of the furnace, DC leakage current will rise, which can be sensed in the bottom lining wear control and/or indicating circuits. For a particular furnace design, a leakage current rise level set point can be established for indication of lining replacement, based on bottom lining wear, when the furnace is properly operated and maintained.

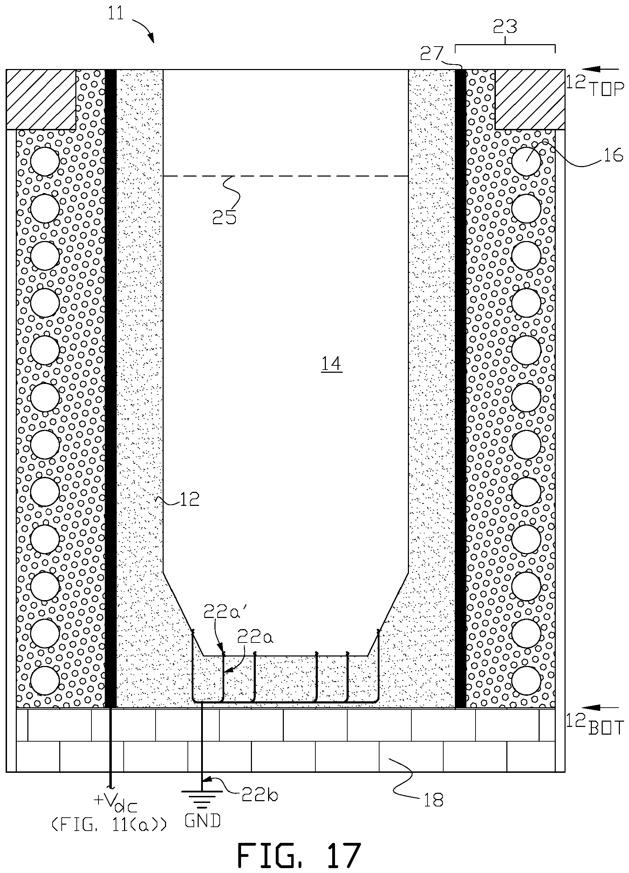

In some examples of the invention, electrically conductive wire assemblage 27 or 35 may extend for the entire vertical height of lining 12, that is, from the bottom (12_{BOT}) of the furnace lining to the very top (12_{TOP}) of the furnace lining that is above the nominal design melt line 25 for a particular furnace as shown, for example, in FIG. 17 for electrically conductive wire assemblage 27.

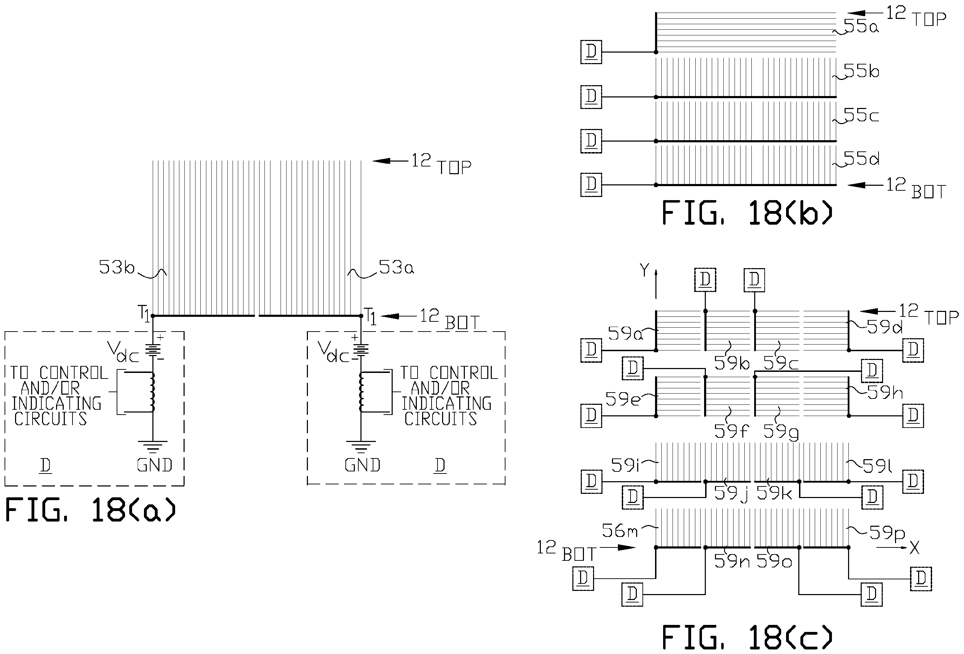

In other applications, electrically conductive wire assemblage 27 may be provided in one or more selected discrete regions along the vertical height of lining 12. For example in FIG. 18(a) the electrically conductive wire assemblage comprises two vertical electrically conductive wire assemblages 53a and 53b that are electrically isolated from each other and connected to separate lining wear detection circuits so that lining wear can be sensed as being on either one half side of the furnace lining. Further any multiple of separate, vertically oriented and electrically isolated wall electrically conductive wire assemblage regions may be provided along the vertical height of lining 12 with each separate wall region being connected to a separate lining wear detection circuit so that lining wear could be localized to one of the wall regions. Alternatively the multiple electrically conductive wire assemblages 53a and 53b in FIG. 18(a) can be horizontally oriented with each electrically isolated electrically conductive wire assemblage connected to a separate lining wear detection circuit and control and/or indicating circuits (D) so that lining wear can be localized to one of the isolated wire assemblage regions. One or more of the vertical risers may be oriented in different directions. For example wire assemblage 55a at the top of the furnace in FIG. 18(b) has the protection wires oriented with horizontal while wire assemblages 55b, 55c and 55d are vertically oriented. Most generally as shown in FIG. 18(c) the multiple electrically conductive wire assemblage 59a through 59p can be arrayed around the height of the replaceable lining wall with each electrically conductive wire assemblage connected to a separate lining wear detection circuit (D) with control and/or indicating circuit so that lining wear can be localized to one of the isolated electrically conductive wire assemblage regions that can be defined by a two-dimensional X-Y coordinate system around the circumference of the replaceable lining wall with the X (horizontal) coordinate defining a position around the circumference of the lining and the Y (vertical) coordinate defining a position along the height of the lining.

In similar fashion bottom, discontinuous mesh 30, continuous mesh 30' or wire assemblage 30" may cover less than the entire bottom of replaceable lining 12 in some examples , or comprise a number of electrically isolated bottom meshes or wire assemblages with each of the electrically isolated bottom meshes or wire assemblages connected to a separate lining wear detection circuit so that lining wear could be localized to one of the bottom mesh or wire assemblage regions.

As an alternative to a separate detector (control and/or indicating circuits) for each lining wear detection circuit in the above examples, a single detector can be switchably connected to the lining wear detection circuits associated with two or more of the electrically conductive meshes or wire assemblages in all examples.

While the figures illustrate separate wall electrically conductive wire assemblage and bottom lining wear detection systems, in some examples, a combined wall electrically conductive wire assemblage and bottom lining wear detection system may be provided either by (1) providing a continuous side electrically conductive wire assemblage and bottom mesh or wire assemblage embedded in a refractory with a single lining wear detection circuit and detector or (2) providing separate side electrically conductive wire assemblage and bottom meshes or wire assemblages embedded in a refractory with a common lining wear detection circuit and detector.

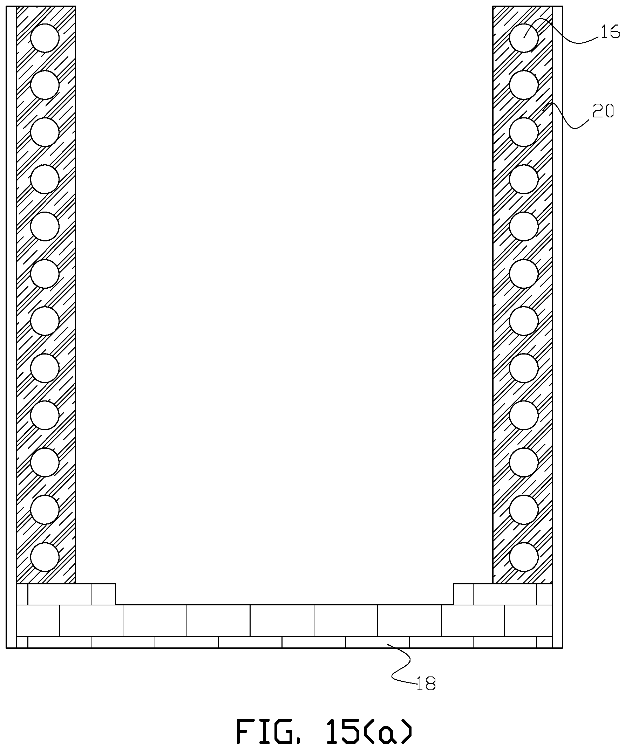

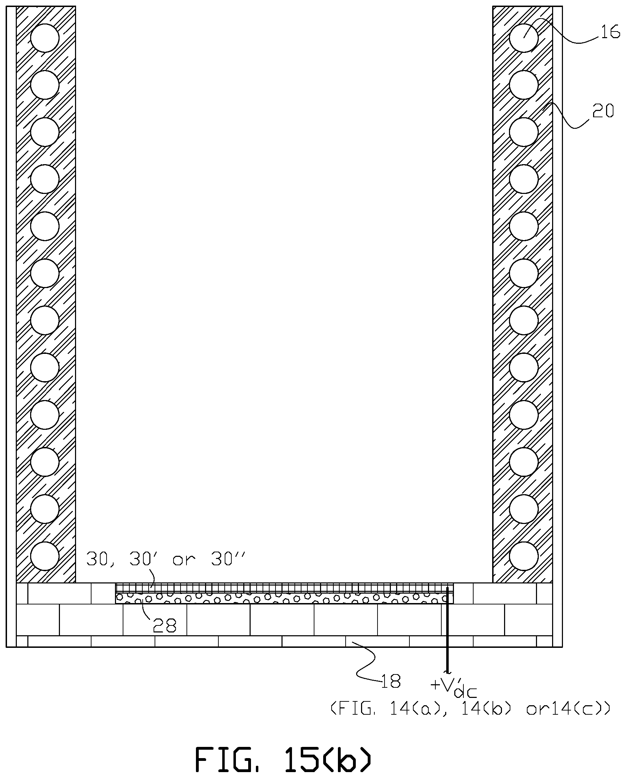

FIG. 15(a) through FIG. 15(h) illustrate examples of the fabrication of an electric induction furnace with a lining wear detection system of the present invention with a side electrically conductive wire assemblage. Induction coil 16 can be fabricated (typically wound) and positioned over suitable foundation 18. As shown in FIG. 15(a) trowelable refractory (grout) material 20, or other suitable refractory, can be installed around the coil as in the prior art. One suitable proprietary trowelable refractory material 20 is INDUCTOCOAT™ 35AF (available from Inductotherm Corp., Rancocas, New Jersey). If a bottom lining wear detection system is used, an alternative discontinuous or continuous bottom mesh 30 or 30', or wire assemblage 30" can be fitted at the top of foundation 18 and embedded in a bottom refractory, for example, a cast flowable refractory by pouring the cast flowable refractory around the selected bottom mesh or wire assemblage so that the mesh or wire assemblage is embedded within the refractory after it sets as shown in FIG. 15(b). Alternatively the bottom mesh or wire assemblage can be cast in refractory 28 in a separate mold and then the cast refractory embedded bottom mesh or wire assemblage can be installed in the bottom of the furnace after the cast flowable refractory sets.

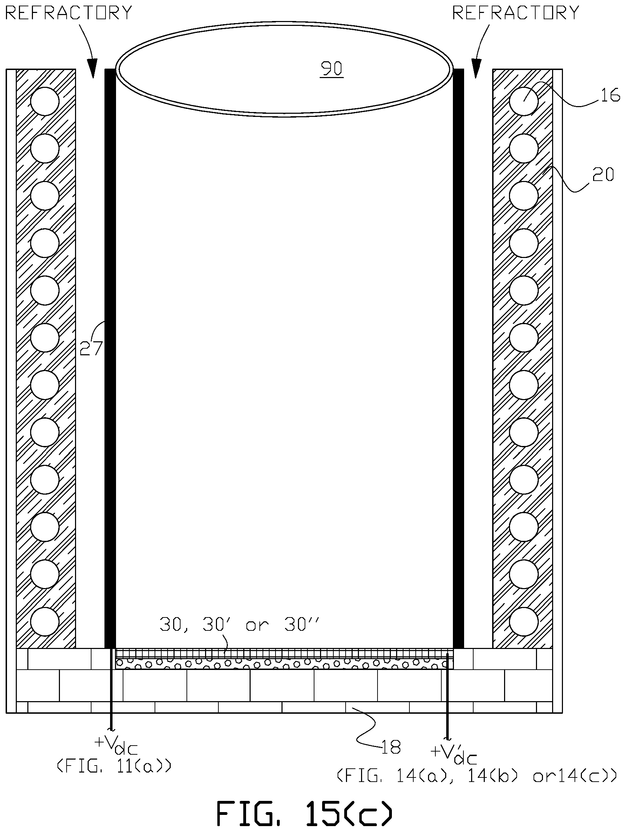

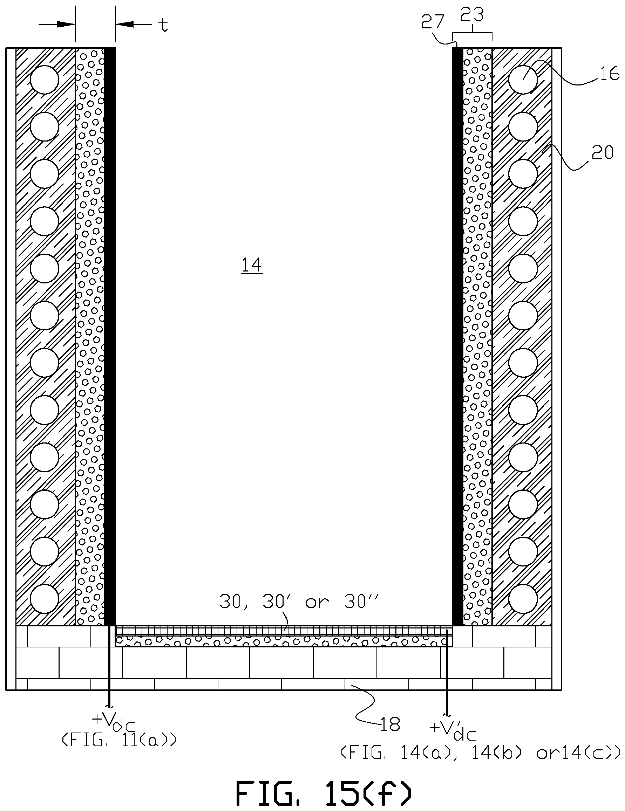

A suitable temporary cast flowable refractory mold 90 (or molds forming a formwork) for example, in the shape of an open right cylinder, is positioned within the volume formed by coil 16 and refractory material 20 to form a wire assemblage refractory annular volume between refractory material 20 and the outer wall perimeter of the mold as shown in FIG. 15(c). Mold 90 is also referred to as the wire assemblage refractory mold. Electrically conductive wire assemblage 27, for example as shown in FIG. 11(a), is fitted around the outer perimeter of temporary mold 90 and the wire assemblage refractory 23, such as INDUCTOCOAT™ 35AF-FLOW (available from Inductotherm Corp., Rancocas, New Jersey), can be supplied to the wire assemblage refractory annular volume to set and form hardened wire assemblage refractory 23 as shown in FIG. 15(f).

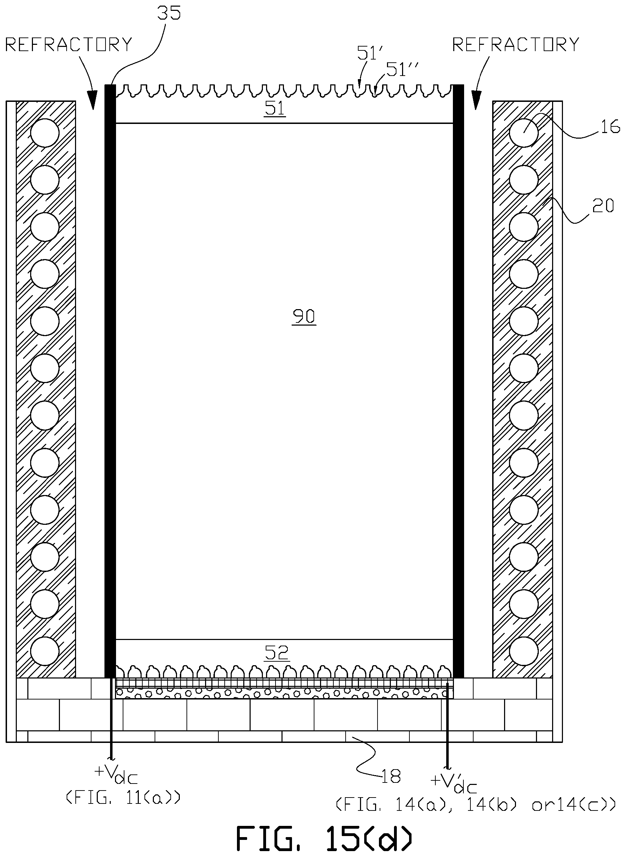

Alternatively for the electrically conductive wire assemblage 35 shown in FIG. 12(a) temporary top wire assemblage fixture (or fitting) 51 is positioned at the top, or adjacent to the top, of temporary mold 90 in FIG. 15(d). A temporary bottom wire assemblage fixture (or fitting) 52 is positioned at the bottom, or adjacent to the bottom, of temporary mold 90 and continuous electrically conductive wire 35 is weaved vertically around the outer circumference of the temporary mold in this example of the invention by using the top and bottom fittings as further illustrated in FIG. 12(d) which temporary fittings are removed after wire 35 is weaved. One continuous wire 35 may be weaved around the entire circumference of the temporary mold or two or more continuous wires may be used to complete a weave around the entire circumference.

An alternative method of forming the electrically conductive wire assemblage 27 in FIG. 11(a) is to weave continuous electrically conductive wire 35 shown in FIG. 12(a) vertically around the outer circumference of temporary mold 90 as described in the previous paragraph and then cut off all the top loops 35a and bottom loops 35b shown in FIG. 12(a) of the continuous electrically conductive wire to form the riser wires 27₁ to 27₂₆ in FIG. 11(a); the riser wires are then connected together, for example, at the bottom of the induction furnace with a collector wire 29 to form the electrically conductive wire assemblage 27 shown in FIG. 11(a).

Vibrating compactors can be used to release trapped air and excess water from a cast flowable refractory (if used) so that the wire assemblage refractory settles firmly in place in the formwork before setting. Electrically conductive wire assemblage 27 or 35 will be at least partially embedded in wire assemblage refractory 23 when it sets inside of the wire assemblage refractory annular volume.

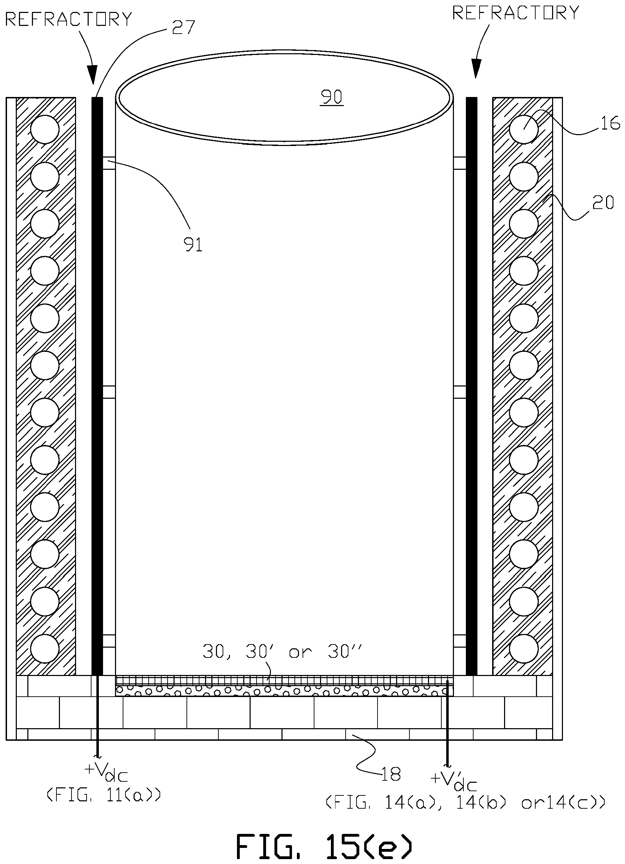

In other examples of the invention electrically conductive wire assemblage 27 or 35 can be embedded anywhere within the thickness, t, of cast flowable refractory 24. For example as shown in FIG. 16, electrically conductive wire assemblage 27 is offset by distance, t₁, from the inner wall perimeter of wire assemblage refractory 23. Offset embedment can be achieved by installing suitable standoffs 91 around the outer perimeter of mold 90 as shown in FIG. 15(e) and then fitting electrically conductive wire assemblage 27 around the standoffs before providing the wire assemblage refractory. In the broadest sense as used herein, the terminology mesh or wire assemblage "embedded" in a refractory is used to indicate that the mesh or wire assemblage is either fixed within the refractory; at a surface boundary of the refractory, or sufficiently, but not completely, embedded at a surface boundary of the refractory so that the mesh or wire assemblage is retained in place in the refractory after the refractory sets.

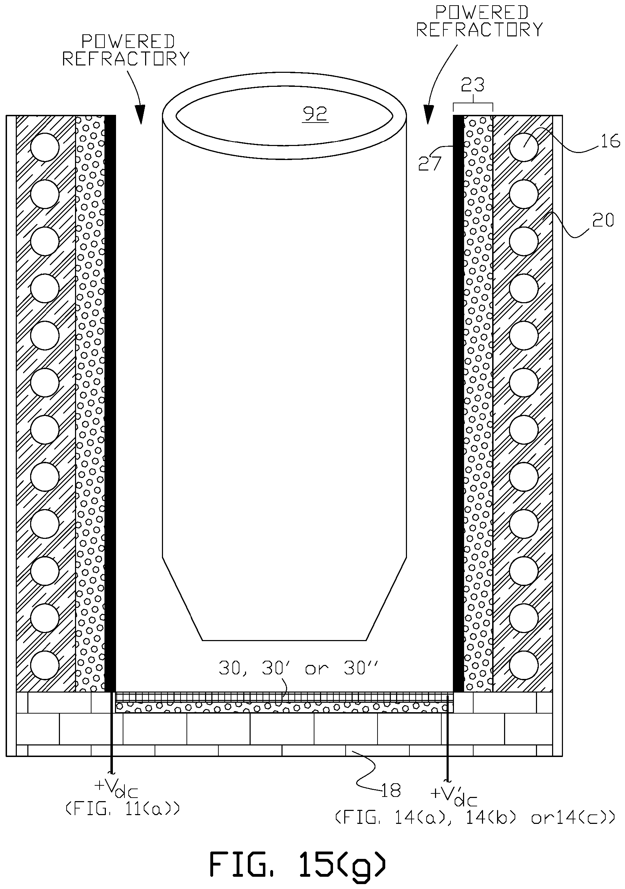

After wire assemblage refractory 23 sets, temporary mold 90 is removed (with top 51 and bottom 52 wire assemblage fixtures if used), and a replaceable lining mold 92 that is shaped to conform to the boundary wall and bottom of interior furnace volume 14 can be positioned within the volume formed by set wire assemblage refractory 23 (with embedded wire assemblage 27) to form a replaceable lining annular volume between set cast flowable refractory 23 and the outer wall perimeter of the lining mold 92 as shown in FIG. 15(g). A conventional powdered refractory, for example, can then be fed into the lining volume according to conventional procedures. If lining mold 92 is formed from an electrically conductive mold material, lining mold 92 can be heated and melted in place according to conventional procedures to sinter the lining refractory layer that forms the boundary of furnace volume 14. Alternatively the lining mold may be removed and sintering of the lining refractory layer may be accomplished by direct heat application.

Distinction is made between the replaceable lining refractory, which is typically a powdered refractory and the cast flowable refractory in which the electrically conductive mesh or wire assemblage is typically embedded. The cast flowable refractory is preferably used so that the electrically conductive mesh or wire assemblage can be embedded in the refractory. The cast flowable refractory is also referred to herein as castable refractory and flowable refractory.

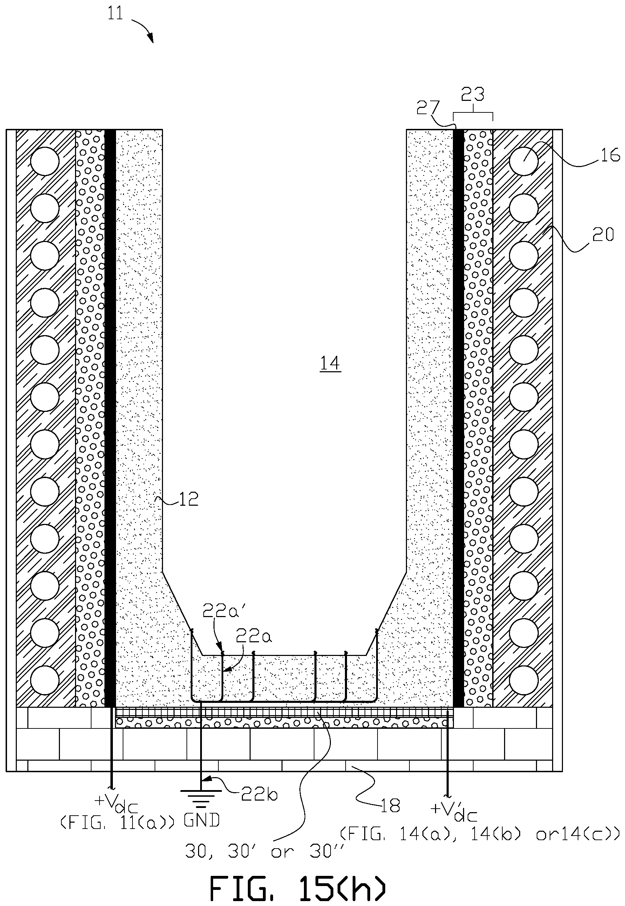

FIG. 15(h) illustrates an electric induction furnace with one example of a lining wear detection system of the present invention with side wire assemblage 27 addition of typical furnace ground leak detector system probe wires 22a and electrical ground lead 22b that is connected to a furnace electrical ground (GND).

The fabrication processes described above and as shown in FIG. 15(a) through FIG. 15(h) illustrate non-limiting examples of fabrication steps exemplary to the present invention. Additional conventional fabrication steps may be required to complete furnace construction.

In alternative examples of the invention rather than using a separate trowelable refractory (grout) around coil 16, cast flowable refractory 24 can be extended to, and around coil 16.

The induction furnace of the present invention may be of any type, for example, a bottom pour, top tilt pour, pressure pour, or push-out electric induction furnace, operating at atmosphere or in a controlled environment such as an inert gas or vacuum. While the induction furnace shown in the figures has a circular interior cross section, furnaces with other cross sectional shapes, such as square, may also utilize the present invention. While a single induction coil is shown in the drawing for the electric induction furnace of the present invention, the term "induction coil" as used herein also includes a plurality of induction coils either with individual electrical connections and/or electrically interconnected induction coils.

Further the lining wear detection system of the present invention may also be utilized in portable refractory lined ladles used to transfer molten metals between locations and stationary refractory lined launders.

The examples of the invention include reference to specific electrical components. One skilled in the art may practice the invention by substituting components that are not necessarily of the same type but will create the desired conditions or accomplish the desired results of the invention. For example, single components may be substituted for multiple components or vice versa.

## Claims

1. A method of fabricating an electric induction furnace (11) with a lining wear detection system, the method comprising the steps of:
locating a wound induction coil (16) above a foundation (18);
installing a refractory (20) around the wound induction coil (16) to form a refractory embedded induction coil;
positioning a wire assemblage refractory mold (90) within the refractory embedded induction coil to provide a wire assemblage refractory volume between an outer wire assemblage refractory mold wall of the wire assemblage refractory mold (90) and an inner refractory embedded induction coil wall of the refractory embedded induction coil;
fitting a temporary top wire assemblage fixture (51) around the top circumference of the wire assemblage refractory mold (90) and a temporary bottom wire assemblage fixture (52) around the bottom circumference of the wire assemblage refractory mold, each of the temporary top and bottom wire assemblage fixtures having a plurality of circumferential wire insertion notches (51', 52') around the circumference of each of the temporary top and bottom wire assemblage fixtures (51, 52), each of the plurality of circumferential wire insertion notches having a wire turn sub-notch (51", 52");
fitting at least one electrically conductive wire assemblage (27) around the outer wire assemblage refractory mold wall of the wire assemblage refractory mold (90), the at least one electrically conductive wire assemblage (27) comprising at least one continuous wire, the at least one continuous wire (35) vertically weaved at least partially around the height of the outer circumference of the temporary top and bottom wire assemblage fixtures (51, 52) by sequential insertion of the single continuous wire (35) within the wire turn sub-notch (51", 52") of each circumferential wire insertion notches (51', 52') of the temporary top and bottom wire assemblage fixtures;
providing a wire assemblage refractory (23) into the wire assemblage refractory volume to embed the at least one electrically conductive wire assemblage (27) in the wire assemblage refractory (23) to form an embedded wire assemblage refractory in the wire assemblage refractory volume;
removing the wire assemblage refractory mold (90) and the temporary top and bottom wire assemblage fixtures (51, 52) to form an interior wire assemblage refractory furnace volume;
positioning a replaceable lining mold (92) within the interior of the wire assemblage refractory furnace volume to form a replaceable lining wall volume between an outer replaceable lining mold wall of the replaceable lining mold (92) and an inner embedded wire assemblage refractory wall of the embedded wire assemblage refractory, and a replaceable lining bottom volume above the foundation (18);
feeding a replaceable lining refractory (12) into the replaceable lining wall volume and the replaceable lining bottom volume; and
removing the replaceable lining mold (92) to form an interior volume of the electric induction furnace (11).

2. The method of claim 1 wherein the at least one continuous wire (35) comprises a single electrically continuous wire weaved around the circumference of the wire assemblage refractory mold (90).

3. The method of claim 2 further comprising cutting off the top (35a) and the bottom (35b) loops of the single electrically continuous wire (35) to form a plurality of vertically oriented wires spaced apart horizontally from each other around the outer circumference of the replaceable lining (23) within the wire assemblage refractory (27) and electrically joining the plurality of vertically oriented wires with a collector wire (29).

4. The method of claim 1, 2 or 3 further comprising the step of fitting at least one bottom continuous (30') or discontinuous (30) electrically conductive mesh or at least one bottom electrically conductive wire assemblage (30") embedded in a bottom refractory above the foundation (18) and below the replaceable lining bottom volume.

5. The method of claim 1 to 3 further comprising the step of installing a lining wear detection circuit from each of the at least one continuous wires to a furnace electrical ground (GND) connection.

6. The method of claim 5 further comprising the step of installing at least one detector for the lining wear detection circuit.

7. The method of claim 4 further comprising the step of installing a bottom lining wear detection circuit from each of the at least one bottom continuous (30') or discontinuous (30) electrically conductive mesh or the at least one bottom electrically conductive wire assemblage (30") to a furnace electrical ground (GND) connection.

8. The method of claim 7 further comprising the step of installing at least one detector for the bottom lining wear detection circuit.

## Patentansprüche

1. Verfahren zum Herstellen eines Elektro-Induktionsofens (11) mit einem Auskleidungs-Verschleißerkennungssystem, wobei das Verfahren folgende Schritte umfasst:
Anordnen einer gewickelten Induktionsspule (16) über einem Fundament (18);
Installieren eines Feuerfestmaterials (20) um die gewickelte Induktionsspule (16), um eine in Feuerfestmaterial eingebettete Induktionsspule zu bilden;
Positionieren einer Drahtverbund-Feuerfestmaterialform (90) in der in Feuerfestmaterial eingebetteten Induktionsspule, um einen Drahtverbund-Feuerfestmaterialraum zwischen einer äußeren Drahtverbund-Feuerfestmaterialformwand der Drahtverbund-Feuerfestmaterialform (90) und einer inneren in Feuerfestmaterial eingebetteten Induktionsspulenwand der in Feuerfestmaterial eingebetteten Induktionsspule bereitzustellen;
Anbringen einer provisorischen oberen Drahtverbundhalterung (51) um den oberen Umfang der Drahtverbund-Feuerfestmaterialform (90) und einer provisorischen unteren Drahtverbundhalterung (52) um den unteren Umfang der Drahtverbund-Feuerfestmaterialform, wobei die provisorische obere und die provisorische untere Drahtverbundhalterung jeweils eine Vielzahl von umlaufenden Drahteinfügeaussparungen (51', 52') um den jeweiligen Umfang der provisorischen oberen und der provisorischen unteren Drahtverbundhalterung (51, 52) aufweisen, wobei jede der Vielzahl von umlaufenden Drahteinfügeaussparungen eine Drahtwindungs-Unteraussparung (51", 52") aufweist;
Anbringen mindestens eines elektrisch leitfähigen Drahtverbunds (27) um die äußere Drahtverbund-Feuerfestmaterialformwand der Drahtverbund-Feuerfestmaterialform (90), wobei der mindestens eine elektrisch leitfähige Drahtverbund (27) mindestens einen durchgängigen Draht umfasst, wobei der mindestens eine durchgängige Draht (35) durch aufeinanderfolgendes Einfügen des einzelnen durchgängigen Drahts (35) in der Drahtwindungs-Unteraussparung (51", 52") jeder umlaufenden Drahteinfügeaussparung (51', 52') der provisorischen oberen und der provisorischen unteren Drahtverbundhalterung mindestens teilweise um die Höhe des Außenumfangs der provisorischen oberen und der provisorischen unteren Drahtverbundhalterung (51, 52) vertikal gewoben ist;
Bereitstellen eines Drahtverbund-Feuerfestmaterials (23) in den Drahtverbund-Feuerfestmaterialraum, um den mindestens einen elektrisch leitfähigen Drahtverbund (27) in dem Drahtverbund-Feuerfestmaterial (23) einzubetten, um ein Feuerfestmaterial mit eingebettetem Drahtverbund in dem Drahtverbund-Feuerfestmaterialraum zu bilden;
Entfernen der Drahtverbund-Feuerfestmaterialform (90) und der provisorischen oberen und der provisorischen unteren Drahtverbundhalterung (51, 52), um einen inneren Drahtverbund-Feuerfestmaterial-Ofenraum zu bilden;
Positionieren einer Wechselauskleidungsform (92) in dem Inneren des Drahtverbund-Feuerfestmaterial-Ofenraums, um einen Wechselauskleidungs-Wandraum zwischen einer äußeren Wechselauskleidungsformwand der Wechselauskleidungsform (92) und einer inneren Feuerfestmaterialwand mit eingebettetem Drahtverbund des Feuerfestmaterials mit eingebettetem Drahtverbund und einen Wechselauskleidungs-Bodenraum über dem Fundament (18) zu bilden;
Einbringen eines Wechselauskleidungs-Feuerfestmaterials (12) in den Wechselauskleidungs-Wandraum und den Wechselauskleidungs-Bodenraum; und
Entfernen der Wechselauskleidungsform (92), um einen Innenraum des Elektro-Induktionsofens (11) zu bilden.

2. Verfahren nach Anspruch 1, wobei der mindestens eine durchgängige Draht (35) einen einzelnen elektrisch durchgängigen Draht umfasst, der um den Umfang der Drahtverbund-Feuerfestmaterialform (90) gewoben ist.

3. Verfahren nach Anspruch 2, ferner umfassend das Abschneiden der oberen (35a) und der unteren (35b) Schlingen des einzelnen elektrisch durchgängigen Drahts (35), um eine Vielzahl von vertikal orientierten Drähten zu bilden, die horizontal voneinander beabstandet um den Außenumfang der Wechselauskleidung (23) in dem Drahtverbund-Feuerfestmaterial (27) angeordnet sind, und elektrisches Verbinden der Vielzahl von vertikal orientierten Drähten mit einem Sammeldraht (29).

4. Verfahren nach Anspruch 1, 2 oder 3, ferner umfassend den Schritt des Anbringens mindestens eines unteren durchgängigen (30') oder unterbrochenen (30) elektrisch leitfähigen Gitters oder mindestens eines unteren elektrisch leitfähigen Drahtverbunds (30"), das bzw. der in einem Bodenfeuerfestmaterial über dem Fundament (18) und unter dem Wechselauskleidungs-Bodenraum eingebettet ist.

5. Verfahren nach Anspruch 1 bis 3, ferner umfassend den Schritt des Installierens einer Auskleidungs-Verschleißerkennungsschaltung von jedem der mindestens einen durchgängigen Drähte zu einem elektrischen Masseanschluss (GND) des Ofens.

6. Verfahren nach Anspruch 5, ferner umfassend den Schritt des Installierens mindestens eines Detektors für die Auskleidungs-Verschleißerkennungsschaltung.

7. Verfahren nach Anspruch 4, ferner umfassend den Schritt des Installierens einer Bodenauskleidungs-Verschleißerkennungsschaltung von jedem des mindestens einen unteren durchgängigen (30') oder unterbrochenen (30) elektrisch leitfähigen Gitters oder des mindestens einen unteren elektrisch leitfähigen Drahtverbunds (30") zu einem elektrischen Masseanschluss (GND) des Ofens.

8. Verfahren nach Anspruch 7, ferner umfassend den Schritt des Installierens mindestens eines Detektors für die Bodenauskleidungs-Verschleißerkennungsschaltung.

## Revendications

1. Procédé de fabrication d'un four électrique à induction (11) doté d'un système de détection d'usure de revêtement, le procédé comportant les étapes consistant à :
mettre en place une bobine d'induction enroulée (16) au-dessus d'une fondation (18) ;
installer un matériau réfractaire (20) autour de la bobine d'induction enroulée (16) pour former une bobine d'induction incorporée dans un matériau réfractaire ;
positionner un moule de matériau réfractaire d'assemblage de fils (90) à l'intérieur de la bobine d'induction incorporée dans un matériau réfractaire à des fins de mise en œuvre d'un volume de matériau réfractaire d'assemblage de fils entre une paroi extérieure de moule de matériau réfractaire d'assemblage de fils du moule de matériau réfractaire d'assemblage de fils (90) et une paroi intérieure de bobine d'induction incorporée dans un matériau réfractaire de la bobine d'induction incorporée dans un matériau réfractaire ;
poser un accessoire supérieur temporaire d'assemblage de fils (51) autour de la circonférence supérieure du moule de matériau réfractaire d'assemblage de fils (90) et un accessoire inférieur temporaire d'assemblage de fils (52) autour de la circonférence inférieure du moule de matériau réfractaire d'assemblage de fils, chacun parmi les accessoires supérieur et inférieur temporaires d'assemblage de fils ayant une pluralité d'entailles circonférentielles d'insertion de fils (51', 52') autour de la circonférence de chacun des accessoires supérieur et inférieur temporaires d'assemblage de fils (51, 52), chacune de la pluralité d'entailles circonférentielles d'insertion de fils ayant une sous-entaille de tour de fils (51", 52") ;
poser au moins un assemblage de fils électriquement conducteurs (27) autour de la paroi extérieure de moule de matériau réfractaire d'assemblage de fils du moule de matériau réfractaire d'assemblage de fils (90), ledit au moins un assemblage de fils électriquement conducteurs (27) comportant au moins un fil continu, ledit au moins un fil continu (35) étant tissé à la verticale au moins partiellement autour de la hauteur de la circonférence extérieure des accessoires supérieur et inférieur temporaires d'assemblage de fils (51, 52) par insertion séquentielle du fil continu unique (35) à l'intérieur de la sous-entaille de tour de fils (51", 52") de chacune des entailles circonférentielles d'insertion de fils (51', 52') des accessoires supérieur et inférieur temporaires d'assemblage de fils ;
mettre en œuvre un matériau réfractaire d'assemblage de fils (23) dans le volume de matériau réfractaire d'assemblage de fils pour incorporer ledit au moins un assemblage de fils électriquement conducteurs (27) dans le matériau réfractaire d'assemblage de fils (23) pour former un matériau réfractaire d'assemblage de fils incorporé dans le volume de matériau réfractaire d'assemblage de fils ;
retirer le moule de matériau réfractaire d'assemblage de fils (90) et les accessoires supérieur et inférieur temporaires d'assemblage de fils (51, 52) pour former un volume intérieur de four de matériau réfractaire d'assemblage de fils ;
positionner un moule de revêtement remplaçable (92) à l'intérieur de la partie intérieure du volume de four de matériau réfractaire d'assemblage de fils pour former un volume de paroi de revêtement remplaçable entre une paroi extérieure de moule de revêtement remplaçable du moule de revêtement remplaçable (92) et une paroi intérieure de matériau réfractaire d'assemblage de fils incorporé du matériau réfractaire d'assemblage de fils incorporé, et un volume inférieur de revêtement remplaçable au-dessus de la fondation (18) ;
alimenter un matériau réfractaire de revêtement remplaçable (12) jusque dans le volume de paroi de revêtement remplaçable et le volume inférieur de revêtement remplaçable ; et
retirer le moule de revêtement remplaçable (92) pour former un volume intérieur du four électrique à induction (11).

2. Procédé selon la revendication 1, dans lequel ledit au moins un fil continu (35) comporte un fil électriquement continu unique tissé autour de la circonférence du moule de matériau réfractaire d'assemblage de fils (90).

3. Procédé selon la revendication 2, comportant par ailleurs l'étape consistant à couper les boucles supérieures (35a) et inférieures (35b) du fil électriquement continu unique (35) pour former une pluralité de fils orientés à la verticale espacés à l'horizontale les uns par rapport aux autres autour de la circonférence extérieure du revêtement remplaçable (23) à l'intérieur du matériau réfractaire d'assemblage de fils (27) et l'étape consistant à assembler électriquement la pluralité de fils orientés à la verticale avec un fil de contact (29).

4. Procédé selon la revendication 1, la revendication 2 ou la revendication 3, comportant par ailleurs l'étape consistant à poser au moins une maille inférieure continue (30') ou discontinue (30) électriquement conductrice ou au moins un assemblage inférieur de fils électriquement conducteurs (30") incorporé dans un matériau réfractaire inférieur au-dessus de la fondation (18) et en dessous du volume inférieur de revêtement remplaçable.

5. Procédé selon l'une quelconque des revendications 1 à 3, comportant par ailleurs l'étape consistant à installer un circuit de détection d'usure de revêtement à partir de chacun desdits, au moins un, fils continus sur une connexion de mise à la terre électrique (GND) du four.

6. Procédé selon la revendication 5, comportant par ailleurs l'étape consistant à installer au moins un détecteur pour le circuit de détection d'usure de revêtement.

7. Procédé selon la revendication 4, comportant par ailleurs l'étape consistant à installer un circuit de détection d'usure de revêtement inférieur à partir de chacun parmi ladite au moins une maille inférieure continue (30') ou discontinue (30) électriquement conductrice ou ledit au moins un assemblage inférieur de fils électriquement conducteurs (30") sur une connexion de mise à la terre électrique (GND) du four.

8. Procédé selon la revendication 7, comportant par ailleurs l'étape consistant à installer au moins un détecteur pour le circuit de détection d'usure de revêtement inférieur.
